(19) Europäisches Patentamt / European Patent Office / Office européen des brevets

(11) **EP 2 399 179 B1**

(12) **EUROPEAN PATENT SPECIFICATION**

(45) Date of publication and mention of the grant of the patent:
**20.02.2013 Bulletin 2013/08**

(21) Application number: **10711745.9**

(22) Date of filing: **22.02.2010**

(51) Int Cl.:
**G05F 1/67** (2006.01)

(86) International application number:
**PCT/IT2010/000066**

(87) International publication number:
**WO 2010/095159 (26.08.2010 Gazette 2010/34)**

(54) **METHOD FOR CONTROLLING AN ELECTRIC POWER GENERATION SYSTEM BASED ON ENERGY SOURCES, IN PARTICULAR RENEWABLE ENERGY SOURCES, AND RELATED CONTROLLER DEVICE**

VERFAHREN ZUR STEUERUNG EINES SYSTEMS ZUR ERZEUGUNG VON ELEKTRISCHER ENERGIE AUF GRUNDLAGE VON ENERGIEQUELLEN, INSBESONDERE ERNEUERBAREN ENERGIEQUELLEN, UND VERWANDTE STEUERVORRICHTUNG

PROCÉDÉ DE COMMANDE D'UN SYSTÈME DE PRODUCTION D'ÉNERGIE ÉLECTRIQUE UTILISANT DES SOURCES D'ÉNERGIE, EN PARTICULIER DES SOURCES D'ÉNERGIE RENOUVELABLES, ET DISPOSITIF DE COMMANDE ASSOCIÉ

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **20.02.2009 IT SA20090004**

(43) Date of publication of application:
**28.12.2011 Bulletin 2011/52**

(73) Proprietor: **Universita' Degli Studi di Salerno**
**84084 Fisciano (SA) (IT)**

(72) Inventors:
 • **EGIZIANO, Luigi**
   **I-84084 Fisciano (SA) (IT)**
 • **FEMIA, Nicola**
   **I-84084 Fisciano (SA) (IT)**
 • **PETRONE, Giovanni**
   **I-84084 Fisciano (SA) (IT)**
 • **SPAGNUOLO, Giovanni**
   **I-84084 Fisciano (SA) (IT)**
 • **VITELLI, Massimo**
   **I-84084 Fisciano (SA) (IT)**

(74) Representative: **Scilletta, Andrea et al**
   **Barzanò & Zanardo Roma S.p.A.**
   **Via Piemonte, 26**
   **00187 Roma (IT)**

(56) References cited:
   **EP-A2- 0 356 191     WO-A2-2007/007360**
   **US-A- 5 798 631     US-A1- 2005 209 898**

 • **FORTUNATO M ET AL: "Maximum Power Point Tracking in a One-Cycle-Controlled Single-Stage Photovoltaic Inverter" IEEE TRANSACTIONS ON INDUSTRIAL ELECTRONICS, IEEE SERVICE CENTER, PISCATAWAY, NJ, USA LNKD- DOI: 10.1109/TIE.2008.918463, vol. 55, no. 7, 1 July 2008 (2008-07-01), pages 2684-2693, XP011225088 ISSN: 0278-0046 cited in the application**

EP 2 399 179 B1

**Description**

The present invention concerns a method for controlling an electric power generation system, based on energy sources, in particular renewable energy sources, preferably photovoltaic sources or fuel cells, dynamically adaptive through Perturb&Observe or P&O technique carried out on the basis of at least two control variables, the method being simple, reliable, efficient, precise, and inexpensive, optimising the performance of the whole system through dynamic adaptation to the operation instant conditions of the energy source.

The present invention further concerns the related controller device.

In particular, the method according to the invention will be described with reference to a single stage inverter device for an electronic converter, with alternate current output and direct current input (dc-ac), based on switching one-cycle control or OCC technique, also called One-Cycle Control or OCC technique, that allows to maximise the power extracted from the photovoltaic field through dynamic adaptation to the operation instant conditions of the photovoltaic field, by simultaneously optimising both the MPPT control and the output Power Factor or PF-out of the dc-ac converter.

Moreover, the method according to the invention will be described with reference to a controller device for a fuel cell that allows to optimise the cell operation efficiency through dynamic adaptation to its operation instant conditions.

Although in the following description specific reference will be made to the application of the controlling method to specific electronic controllers for photovoltaic sources and polymeric electrolyte membrane or PEM fuel cells, it should be understood that the controlling method (and the related controller device) according to the invention may be applied to any controller and converter, with dc or ac input and/or output, both single-phase and multi-phase, for any energy source operating in isolated mode (supplying dc or ac, either single-phase and multi-phase, electric power to a load) and/or connected to an electric energy distribution network, in particular a renewable energy source, such as photovoltaic systems, fuel cells (also different from PEM ones), wind turbines and other sources, which have particular specific operation conditions considered as preferential, with reference to produced energy, energy efficiency, component stress degree, life, or any other evaluation factor may be defined for a specific source, and which conditions are variable, due to climatic or physical factors or factors of any nature, which are either controllable or uncontrollable, either predictable or unpredictable, and identifiable through one or more particular points of one or more source output electrical or non-electrical characteristic curves such as power-voltage, power-current, voltage-current, current-voltage, efficiency-voltage, efficiency-current or other ones similar thereto.

Moreover, in the following description specific reference will be made to an embodiment of the controlling method based on the P&O technique carried out on the basis of two control variables, but it should be understood that the controlling method may carry out the P&O technique on the basis of a larger number of control variables.

Photovoltaic single stage inverters are gaining more and more interest, in respect to the multi-stage ones, due to their circuit simplicity, reliability and inexpensiveness. A H-bridge controlled by using the OCC technique has been described by Y. Chen and K.Ma. Smedley, in "A cost-effective single-stage inverter with maximum power point tracking", IEEE Transactions on Power Electronics, Vol. 19, No. 5, September 2004, pp. 1289-1294, introducing the use of an analog controller based on OCC in order to obtain maximum power from the photovoltaic source and, simultaneously, a high quality of the waveform of the current at the output of the inverter that is injected into the electric energy distribution network ac electric energy distribution network to which the inverter is connected.

US 5 798 631 A discloses a device for controlling an electrical power generation system, in particular a renewable energy source, and a method of operation of that device.

US 2005/209898 A1 discloses a method and an apparatus for solving a constrained optimisation problem.

EP 0 356 191 A2 discloses methods and apparatus for efficient allocation of resources by optimising nonlinear, convex functions with linear constraints.

However, such approach suffers from some limitations.

A first limitation is due to the fact that the proposed design equations for modelling the inverter do not allow to optimise it in terms of both delivered power and output current quality.

A second limitation is due to the incapability of the controller in following the maximum power point of the photovoltaic source when climatic conditions vary. In other words, the photovoltaic inverter proposed by Chen and Smedley is not capable to really perform the maximum power point tracking (or MPPT), because no control parameter is modified according to the current values of irradiance level and temperature, and hence the best performance of the photovoltaic field are ensured only for prefixed climatic conditions. This causes a heavy compromise during determining parameters, in order to extract the maximum power from the photovoltaic source at the most probable sunlight level in the site of interest by reducing penalisation in producing power for environmental conditions significantly different from the most probable ones.

A solution overcoming such drawbacks has been proposed by N.Femia, D.Granozio, G.Petrone, G.Spagnuolo, and M.Vitelli, in "Optimized One Cycle Control in Photovoltaic Grid Connected Applications", IEEE Transactions on Aerospace and Electronic Systems, Vol.42, No.3, July 2006, pp.963-973, and by PCT Application No. WO2007/007360 A2.

In particular, such disclosures propose a solution allow to establish the design parameters of the OCC controller in order to obtain a power close to the maximum one obtainable at the desired sunlight level, or as an average over a given sunlight range, and so as to fix the maximum distortion level of the output current.

Moreover, the solution proposes by these two disclosures has introduced the possibility of using a MPPT controller allowing to regulate the value of a suitable parameter of the analog circuit implementing the OCC function, in order to maximise the photovoltaic power produced under varying climatic conditions.

M.Fortunato, A.Giustiniani, G.Petrone, G.Spagnuolo, and M.Vitelli, in "Maximum Power Point Tracking in a One Cycle Controlled Single Stage Photovoltaic Inverter", IEEE Transactions on Industrial Electronics, Vol.55, No.7, July 2008, pp.: 2684-2693, have proposed further considerations on the just illustrated solution, in order to understand potentiality of the inverter provided with the single variable MPPT controller in respect to the simpler inverter, the performance of which strictly depend on the performance function chosen for making the optimisation and on the results of such method.

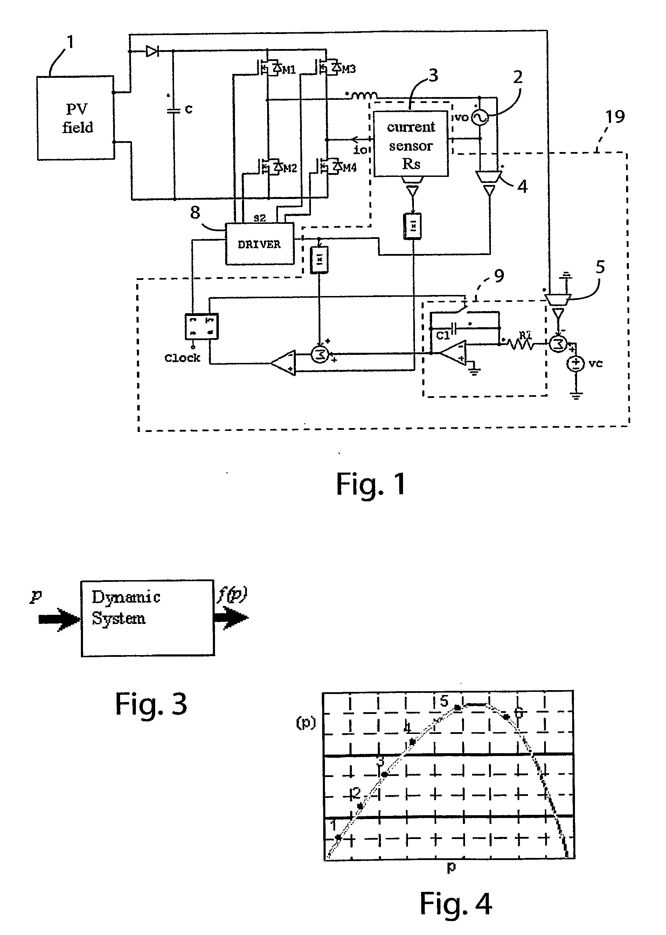

Entering in greater detail, the circuit diagram of a classic structure of an single stage OCC inverter (as described by all the above four disclosures) is shown in Figure 1, wherein a dc-ac converter, connected at its input to the photovoltaic source 1 and at its output to the grid 2, comprises a H-bridge having four semiconductor power switches M1-M4 (preferably implemented through respective MOSFETs or IGBTs), a high-capacity bulk capacitor C sustaining a dc communication channel, also known with the term "bus", and an output filter inductor L. The inverter is controlled by a driving unit 8 on the basis of signals coming from a controller device 19, operating through the OCC technique on the single switching cycle of the switches, having a simple analog circuit structure including a resettable integrator 9.

The inverter by Chen and Smedley has been greatly improved by N.Femia et al. and by WO2007/007360 A2, by introducing the following set of five inequalities, used for expressing the functional constraints and the quality of the inverter output current:

$$R_I C_I = \tau < T_s \qquad\qquad [1]$$

$$V_c \geq K_g V_g + \frac{(2V_{o,\max} - V_g)R_s \tau}{2L} \qquad\qquad [2]$$

$$V_c > K_g (V_g + \Delta V_g) \qquad\qquad [3]$$

$$V_g - \Delta V_g > (1 + K) \cdot V_{o,\max} \qquad\qquad [4]$$

$$K\left(1 - \frac{P_o(S)}{\alpha \cdot P_{g,MPP}(S_{\max})}\right) \cdot (1 - \gamma) \leq \left.\frac{V_m}{V_g}\right|_{\min} \leq \left.\frac{V_m}{V_g}\right|_{\max} \leq K\left(1 - \frac{P_o(S)}{\alpha \cdot P_{g,MPP}(S_{\max})}\right) \cdot (1 + \gamma) \qquad [5]$$

where:

- $\tau = R_I C_I$ is the time constant of the integrator 9;
- $T_s$ is the switching period of the power stage, i.e. of the inverter switches M1-M4,
- $V_c$ is the control voltage,
- $R_s$ is the gain of the sensor 3 for sensing the output current,
- $Kg$ is the gain of the sensor 5 for sensing the voltage of the photovoltaic field 1,
- $Vg$ indicates the average value of the instant voltage $vg(t)$ generated by the photovoltaic field 1, calculated over a period $Tgrid$ of the ac voltage $vo(t)$ of the grid 2;
- $V_{o,max}$ is the maximum value assumed by the output voltage $v_o(t)$;
- $\Delta V_g$ is the peak-to-peak amplitude of the 120Hz/100Hz oscillation, that is represented by:

$$\Delta V_g = \frac{P_g(S)}{\omega_{grid} V_g C} \qquad [6]$$

where $\omega_{grid}$ is the pulsation frequency of the grid 2 (in rad/s), C is the capacitance of the buffer capacitor, and $P_g$ is the power extracted from the photovoltaic field 1 in correspondence of a certain sunlight level $S$;

- $K$ is the gain of the sensor 4 for sensing the inverter output voltage;
- $P_o(S)$ is the inverter output average power injected into the grid 2 in correspondence of a certain sunlight level S
- $P_{g,MPP}(S_{max})$ is the maximum power deliverable by the photovoltaic field 1 in correspondence of the maximum sunlight level $S = S_{max}$ and at the corresponding voltage $V_g$;
- the coefficient $\alpha$ (with $\alpha \geq 1$) expresses the inverter overload capability with respect to the input maximum power $P_{g,MPP}(S_{max})$ furnished by the photovoltaic field 1;
- $Vm$ indicates the average value of a voltage $v_m(t)$, defined as

$$v_m(t) = \left( \frac{V_c - K_g \cdot v_g(t)}{R_l C_l} \right) \cdot T_s ,$$

which average value is calculated over a period $Tgrid$;

-

$$\left. \frac{V_m}{V_g} \right|_{min} = \frac{V_c - K_g \cdot (V_g + \Delta V_g)}{V_g + \Delta V_g} \cdot \frac{T_s}{\tau} = \left( \frac{V_c}{V_g + \Delta V_g} - K_g \right) \cdot \frac{T_s}{\tau} \qquad [7] ;$$

-

$$\left. \frac{V_m}{V_g} \right|_{max} = \frac{V_c - K_g \cdot (V_g - \Delta V_g)}{V_g - \Delta V_g} \cdot \frac{T_s}{\tau} = \left( \frac{V_c}{V_g - \Delta V_g} - K_g \right) \cdot \frac{T_s}{\tau} \qquad [8];$$

- the coefficient $\gamma$ (with $\gamma < 1$) defines the admissible limits for the range of the ratio $V_m/V_g$ determined by $\Delta V_g$.

As described by Chen and Smedley, the first and second inequalities ensure, respectively, a steady work condition of the non linear OCC technique and inverter stability, whereas the third inequality takes account of the effect of the oscillation, typically at a frequency of 120Hz/100Hz, of the voltage $V_g$ of the photovoltaic field 1 caused by the connection of the inverter output to the grid 2.

Inequality 4 ensures the optimal behaviour of the inverter operating as double buck converter, whereas inequality 5 ensures a high Power Factor-output or PF-out of the converter.

In the paper by N.Femia et al. and in WO2007/007360 A2 a single optimisation approach based on functions indicative of the performance defined to the end of obtaining the highest photovoltaic power at the preferred climatic conditions, e.g. at the maximum and at the minimum sunlight level and over the average of a given variation range, has been proposed. Particular attention has been dedicated to the function indicative of the performance obtained from the difference between the maximum power $P_{g,MPP}(S_{max})$ of the photovoltaic field and the inverter output power $P_o(S_{max})$ at the maximum level $S_{max}$ of sunlight related to the range of interest $[S_{min}, S_{max}]$, given by:

$$\Psi_2 = P_{g,MPP}(S_{max}) - P_o(S_{max}) \qquad [9]$$

The aforementioned problem of constrained maximisation discussed in detail by N.Femia et al. and in WO2007/007360 A2 has given the optimal solution corresponding to the set of the parameters listed in Table I, indicated in the following as "solution hypothesis", which minimise $\Psi2$, obtained through the known genetic search algorithm Genocop.

Table I

| *K* | *K_g* | $R_s$ [$\Omega$] | *Vc* [V] | $\tau$[$\mu$s] | output Power [W] |
|---|---|---|---|---|---|
| 0.031161 | 0.01327885 | 0.305412 | 3.6291 | 9.570 | $P_o(S_{max})$ = 916.5764 |

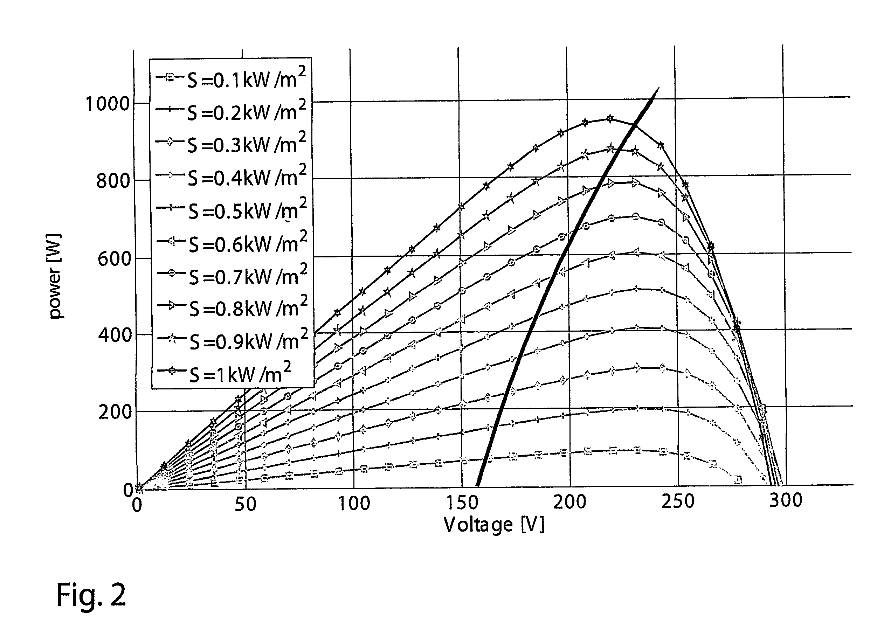

Figure 2 shows the inverter characteristic curves corresponding to the solution hypothesis along with the photovoltaic field characteristic curves used for simulating the system. It is rather evident that a good intersection point, close to the MP P point, has been obtained for the maximum sunlight level $S_{max}$, chosen equal to 1kW/m$^2$, whereas elsewhere power produced by the field is very far from the real MPP point most of all in the intermediate range [300,600] W/m$^2$.

Constraints [1]-[5] depend on the sunlight level through the voltage $V_g$ of the photovoltaic field 1 and the output power $P_o$, whereby the appropriateness of a given set of circuit parameters depends on the sunlight level considered for its evaluation. Consequently, for reaching an optimal solution that is appropriate not only at a specific sunlight level, in N.Femia et al. and in WO2007/007360 A2 a set of circuit parameters would have been considered as appropriate if constraints [1]-[5] had been met for a given number of sunlight levels between a minimum $S_{min}$ and a maximum $S_{max}$, and ten sunlight levels within the range [0,1, 1]kW/m$^2$ have been considered. This means that the optimal solution hypothesis is appropriate within the whole sunlight range and it simultaneously provides the highest photovoltaic power for the level maximum $S_{max}$.

However, such disclosures have recognised that the solution hypothesis needs a further adjustment, since the sunlight level at the current time instant $t^*$ is equal to a specific value $S^*=S(t^*)$, and not to a whole range [$S_{min}$, $S_{max}$], whereby constraints [1]-[5] must be instantaneously met only at that specific level $S^*$. Consequently, a suitable correction of the solution hypothesis could lead to an increase of production of photovoltaic power at the specific level $S^*$, provided that constraints [1]-[5] are still met. Besides, such adjustment should also consider further variations of climatic and physical conditions of the system, such as for instance panel temperature.

In N.Femia et al. and in WO2007/007360 A2 a first method for correcting the solution hypothesis through the so called Perturb&Observe or P&O technique has been proposed.

The P&O technique is based on the well known hill climbing method and it is very adapted for optimising dynamic systems in real time. As shown in Figure 3, it allows to continuously search for the optimal value (e.g., a minimum or a maximum) of a given function $f(p)$ indicative of the performance of the time variant system to control, provided that a suitable parameter $p$ to perturb is determined. In the hypothesis that $f(p)$ exhibits a single optimal value (e.g., a maximum) in the range within which $p$ is varied, the P&O technique is capable to climb the unknown characteristic curve $f(p)$, provided that a continuous perturbation of $p$ is applied with a given period $Tp$ and that a suitable condition for sensing the hill top is met.

As shown in Figure 4, the P&O technique operates as follows. The value of the perturbed parameter $p$ is repeatedly increased (or decreased) if the value $f(p)$ progressively increases (see points 1 to 5 of Figure 4). This means that the system operation point has been moved so that its performance expressed by $f(p)$ are approaching its optimum. Therefore, $p$ must be perturbed in the same direction. Otherwise, if the value $f(p)$ (that expresses system performance) decreases, the system operation point has been moved away from the optimal performance (see points 5 and 6 of Figure 4) and, hence, the direction of the perturbation of $p$ must be reversed. Once the steady state corresponding to the optimal performance has been reached, the system operation point repeatedly descends and climbs the maximum of $f(p)$ (see points 4, 5 and 6 of Figure 4).

Such dynamic movement around the optimal operation point is of fundamental importance for ensuring the tracking of the optimal value of $f(p)$ each time the variation of one or more exogenous variables modifies the performance indicative function and changes the value of $p$ corresponding to the optimal value of $f(p)$.

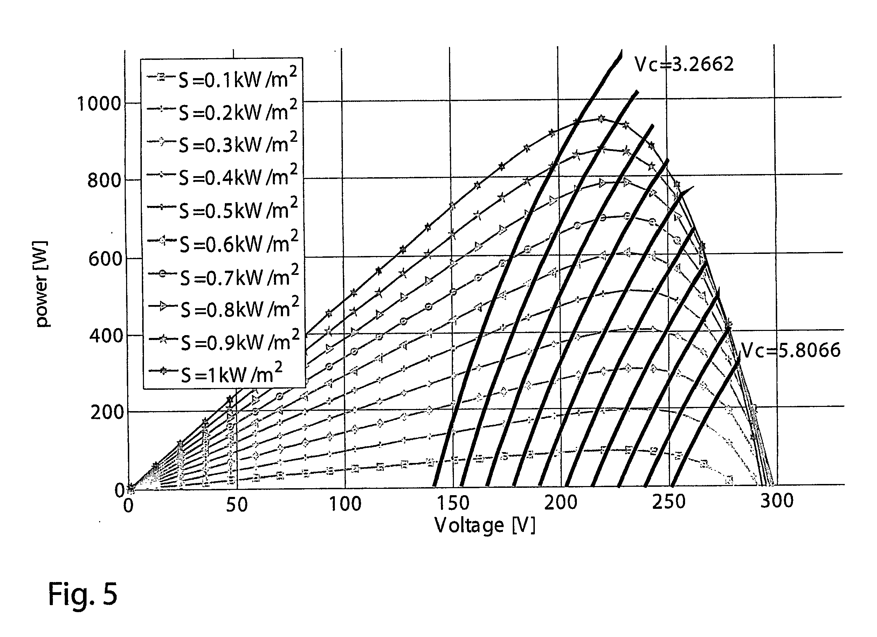

Hence, the technique proposed in N.Femia et al. and in WO2007/007360 A2 provided to vary the value of the control voltage $V_c$, exploiting the ease in regulating the same, and demonstrating that the OCC characteristics may be consequently modified so as to make a real MPPT tracking even when climatic condition, in particular sunlight S and temperature $\theta$, vary. The effect of the variation of $V_c$ is shown in Figure 5.

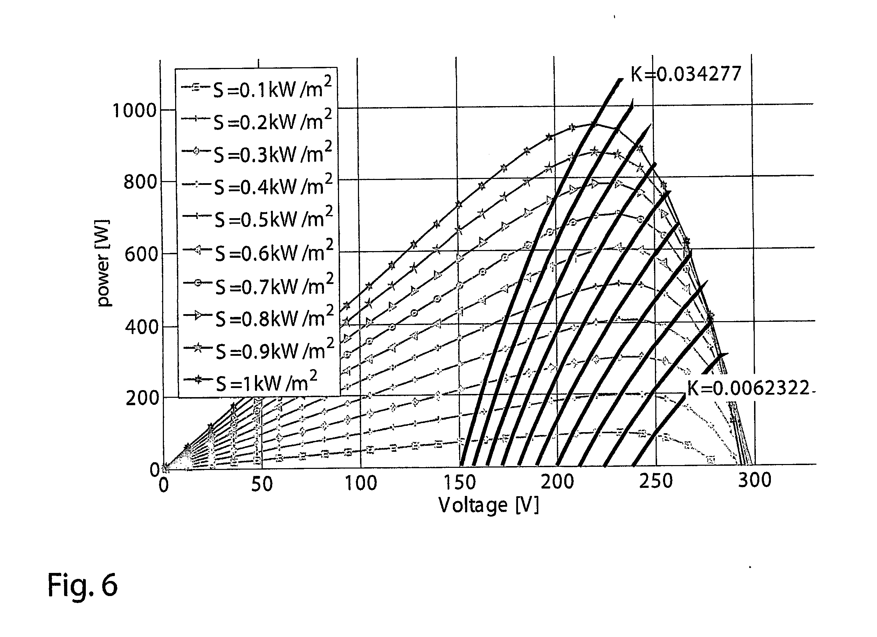

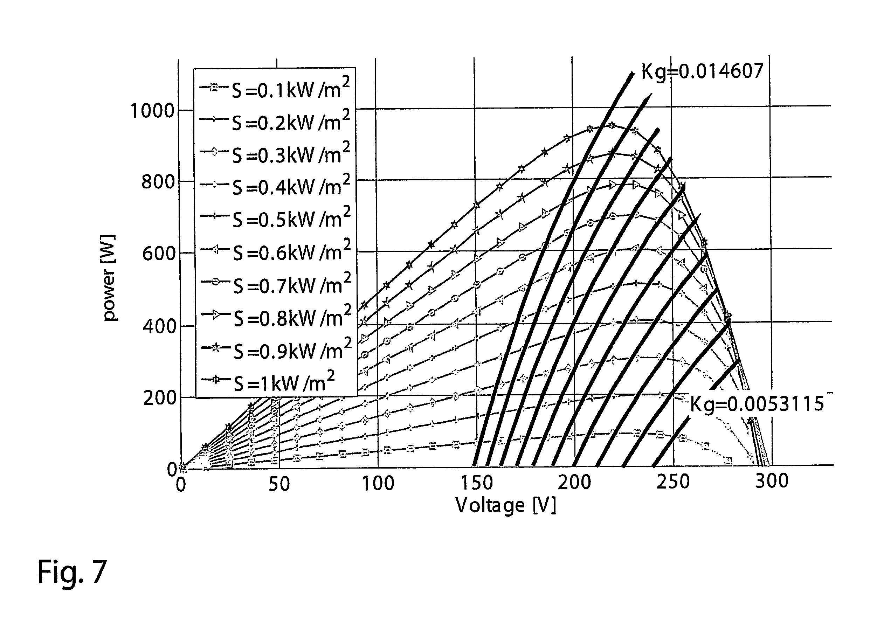

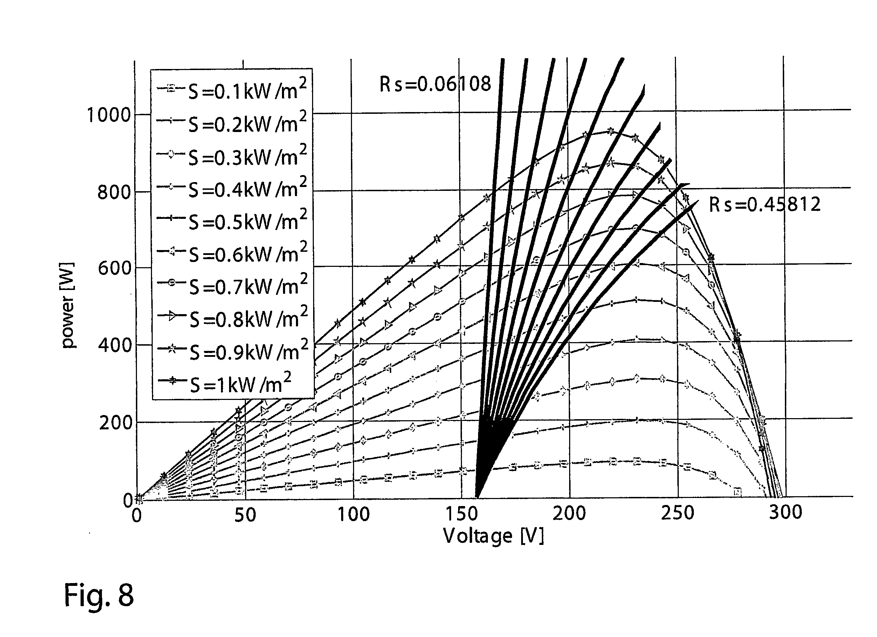

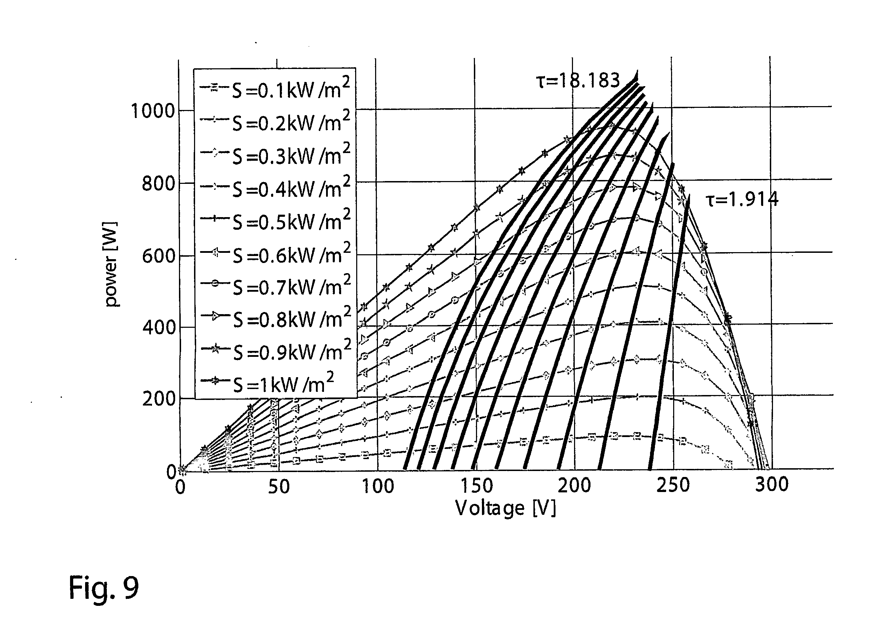

However, as shown in Figures 6-9, it is also possible to modify other parameters of the inverter of Figure 1, instead of the control voltage $V_c$, for making such a MPPT tracking. Such Figures show graphs obtained by varying only one parameter of the aforementioned solution hypothesis in a given range centred on the nominal value given in Table I. Such graphs do not take account of constraints [1]-[5].

Analysis of Figures 5-9 shows that, except for the variation of the gain $R_s$ of the sensor 3, the variation of an inverter parameter is capable to provide a characteristic curve of the OCC inverter covering the region wherein the MPP points of the photovoltaic field characteristic curve are located when the sunlight conditions vary.

However, in presence of constraints [1]-[5], the perturbation of only one inverter controllable parameter could render impossible the extraction of the maximum power allowed by the photovoltaic field.

Among the renewable energy sources, also the fuel cells are presently in growing diffusion. In particular, the polymeric electrolyte membrane or PEM fuel cells are more and more used in many applications, both stand-alone and connected to an ac electric energy distribution network (grid-connected) ones, such as for instance power supply units for portable systems or power supply units in case of grid failure, in automotive applications, for telecommunications, in military applications, and in consumer electronics.

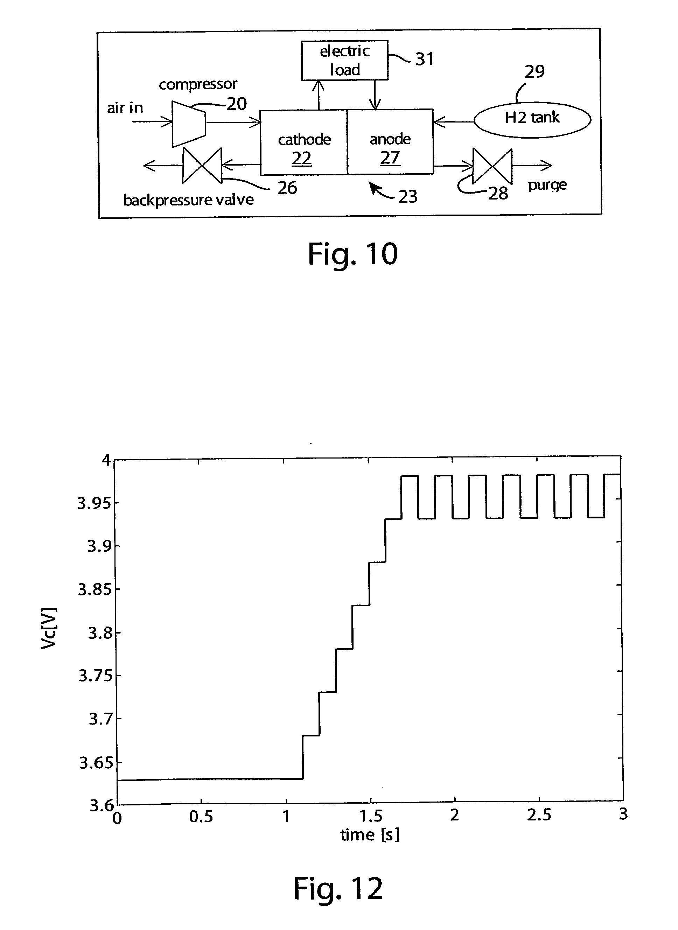

Figure 10 shows a PEM Fuel Cell System, or FCS, in the following also indicated as PEM-FCS.

In the air section, a compressor 20 controlled by an electric motor supplies pressurised air to the channels of the cathode 22 of the cell 23. A heat exchanger and a humidification chamber (not shown) are placed between the compressor 20 and the input of the cathode 22 for regulating temperature and relative humidity, respectively, of the incoming air flow. Air pressure within the cell 23 is regulated by the combination of the action of a back pressure valve 26 with the speed of the compressor 20.

The air compressor 20 has an important role in the FCS system, due to the positive influence of the increase of the pressure of the cathode 22 on the electrochemical reaction. Since power absorbed by the compressor 20 represents the main power loss of the whole FCS system (equal up to 25% of the cell gross power), it is necessary an appropriate evaluation of such parasitic contribution for improving the estimate of FCS system performance.

In any case it must be considered that the compressor 20 is characterised by a well known dynamic behaviour, by an absorbed power and by an efficiency which depend on the operation conditions and on operation limits depending on implementation features and used technology (e.g. surge and choke conditions in centrifugal compressors). This information is usually provided, also through experimental maps, by the manufacturer of the compressor system 20. Teachings provided in relation to the present invention remain valid independently from the cell polarisation model and from the type and model of the used compressor.

The applications of the fuel cells could be even wider if they would be capable to guarantee a longer life, i.e. if they would be capable to ensure high performance for a longer time.

Especially after a large number of operation hours, unsatisfactory performance levels are often due to a coarse control of the FCS system, e.g. in terms of air pressure and flow. In fact, the most efficient setting points in terms of cell current and pressure are often determined in laboratory on the basis of the cell performance and nominal behaviour. Starting from these laboratory analysis, many research efforts have been made for ensuring the operation of the FCS system in the optimal (i.e. most efficient) conditions.

In feedforward control approaches two lookup tables are typically developed for estimating the speed $\omega_{cmd}$ of the compressor 20 and the opening $\beta$ of the back pressure valve 26 of the cathode 22 depending on the current $I$.

Other studies have paid attention to the improvement of the FCS system behaviour during transients by developing suitable closed loop control methods.

However, since the setting points obtained from the lookup tables never vary, such approaches are not capable to guarantee the sa me performance of the FCS systems for long, due to the strong effect, for instance, of the system wear and parameter drifts.

By way of example, the ageing effects cannot be taken into account by the lookup tables. Moreover, the electrical characteristics of the FCS systems are much sensitive to those drifts affecting membrane temperature and humidity as well as membrane electroactive area.

This means that an adaptive control system, assisting the lookup tables for better adapting to the real operation conditions, is necessary for obtaining optimal performance even if the system is operating far from the nominal setting points. Moreover, an adaptive control technique would guarantee obtaining an optimal operation all over the operation domain of the PEM membranes, whereas the classical feedback methods are less effective in conditions significantly different from the linearisation point.

It is therefore an object of the present invention to control an electric power generation system based on energy sources, in particular renewable energy sources, allowing to optimise the performance of the whole system over a wide range of operation conditions of the energy source, taking account of the variations of exogenous variables.

It is still an object of the present invention to carry out such a control of the electric power generation system in a simple, reliable, efficient, precise, and inexpensive way.

It is a particular object of the present invention to optimise the power extracted from a photovoltaic field and inputted into a distribution network, tracking in a highly reliable, accurate, and flexible way the maximum power point of the photovoltaic source when exogenous variables such as sunlight and temperature vary.

It is a further particular object of the present invention to optimise in a highly reliable, accurate, and flexible way the performance of a fuel cell.

It is specific subject matter of the present invention a method for controlling an electric power generation system, based on at least one energy source, as defined in claim 1.

Further embodiments of the method according to the invention are defined in the dependent claims.

It is still specific subject matter of the present invention a controller device for controlling an electric power generation system, based on at least one energy source, as defined in claim 11.

The adaptive control method, and the related controller device, according to the invention, applied to an electric power generation system based on a photovoltaic source carries out a MPPT tracking based on P&O technique operating on the basis of at least two circuit parameters of the device inverter and verifying fulfilment of operation constraints necessary to the correct and safe behaviour of the device inverter, offering significant advantages in terms of power extracted from the photovoltaic field and quality of the current injected into the ac network (or supplied to an ac load), implying a neglectable increase of the control complexity. In particular, the photovoltaic power is maximised under variation of the operation conditions imposed by the actual values of sunlight and temperature.

Similarly, the adaptive control method, and the related controller device, according to the invention, applied to a fuel cell system carries out a control according to the P&O technique, starting from values provided by lookup tables for at least two controllable variables of the system, preferably the compressor speed $\omega_{cmd}$ and the back pressure valve opening $\beta$, thus greatly improving the system performance and reliability under variation of the operation conditions imposed by exogenous variables, such as cell ageing, and/or uncontrollable endogenous variables, such as membrane electroactive area, water content and temperature, to which the cell performance is extremely sensitive. In particular, the control method is simple and robust in tracking the desired performance of the FCS system, dynamically optimising the same in an effective and reliable way.

The present invention will now be described, by way of illustration and not by way of limitation, according to its preferred embodiments, by particularly referring to the Figures of the enclosed drawings, in which:

Figure 1 schematically shows a single stage OCC inverter device of the prior art;

Figure 2 shows the output power-voltage characteristic curves of the device of Figure 1, having a first setting of the parameters according to Table I, and the related operation points when sunlight level varies;

Figure 3 schematically shows a dynamic system;

Figure 4 shows the graph of a performance function of the dynamic system of Figure 3 when a controllable parameter of the latter varies and a sequence of points on the same which are obtained through the hill climbing method when the perturbations of such parameter vary;

Figure 5 shows the output power-voltage characteristic curves of the device of Figure 1, having the parameter setting according to Table I, and the related operation points when sunlight level varies and when control voltage $V_c$ varies within the range [90%, 160%] with respect to the value of Table I (values of $V_c$ are expressed in Volts);

Figure 6 shows the output power-voltage characteristic curves of the device of Figure 1, having the parameter setting according to Table I, and the related operation points when sunlight level varies and when gain K varies within the range [20%, 110%] with respect to the value of Table I;

Figure 7 shows the output power-voltage characteristic curves of the device of Figure 1, having the parameter setting according to Table I, and the related operation points when sunlight level varies and when gain $K_g$ varies within the range [40%, 110%] of the value of Table I;

Figure 8 shows the output power-voltage characteristic curves of the device of Figure 1, having the parameter setting according to Table I, and the related operation points when sunlight level varies and when gain $R_s$ varies within the range [20%, 150%] of the value of Table I (values of $R_s$ are expressed in ohms);

Figure.9 shows the output power-voltage characteristic curves of the device of Figure 1, having the parameter setting according to Table I, and the related operation points when sunlight level varies and when time constant $\tau$ varies within the range [20%, 190%] of the value of Table I (values of $\tau$ are expressed in microseconds);

Figure 10 shows a schematic block diagram of a PEM-FCS system of the prior art;

Figure 11 shows a feasibility map (Fig. 11a) of the device of Figure 1 when the control voltage $V_c$ and the gain $K$ vary, and having the setting of the other parameters according to Table I, so as to satisfy constraints [1]-[5], and the path (Fig. 11b) followed on such a map by the pair of values $V_c$ and $K$ perturbed in a simulation of a preferred embodiment of the control method according to the invention (the side coloured bars refer to the values of the produced photovoltaic power);

Figure 12 shows the variation of the control voltage $V_c$ obtained through a PSIM simulation of the single variable P&O method (operating on the voltage $V_c$) controlling the device of Figure 1 having the setting of the other parameters according to Table I, so as to satisfy constraints [1]-[5];

Figure 13 shows the variations of the control voltage $V_c$ (Fig. 13a) and gain $K$ (Fig. 13b) obtained through a simulation of a preferred embodiment of the method according to the invention controlling the device of Figure 1 having the setting of the other parameters according to Table I, so as to satisfy constraints [1]-[5];

Figure 14 shows the variations of the produced photovoltaic power in the simulation of Figure 13 (Fig. 14a) and in the simulation of Figure 12 (Fig. 14b);

Figure 15 shows a time graph indicative whether the constraint [5] in the simulation of Figure 13 is violated or not;

Figure 16 shows a feasibility map (Fig. 16a) of the device of Figure 1 when the control voltage $V_c$ and gain $K$ vary, and having a second setting of the other parameters, so as to satisfy constraints [1]-[5], and the path (Fig. 16b) followed on such a map by the pair of values $V_c$ and $K$ perturbed in a simulation of the preferred embodiment of the control method according to the invention (the side coloured bars refer to the values of the produced photovoltaic power);

Figure 17 shows the variation of the control voltage $V_c$ obtained through a simulation of the single variable P&O method (operating on the voltage $V_c$) controlling the device of Figure 1 having the second setting of the other parameters, so as to satisfy constraints [1]-[5];

Figure 18 shows the variations of the control voltage $V_c$ (Fig. 18a) and gain $K$ (Fig. 18b) obtained through a simulation of the preferred embodiment of the method according to the invention controlling the device of Figure 1 having the second setting of the other parameters, so as to satisfy constraints [1]-[5];

Figure 19 shows the variations of the produced photovoltaic power in the simulation of Figure 17 (Fig. 19a) and in the simulation of Figure 18 (Fig. 19b);

Figure 20 shows a feasibility map (Fig. 20a) of the device of Figure 1 when the control voltage $V_c$ and gain $K$ vary, and having a third setting of the other parameters, so as to satisfy constraints [1]-[5], and the path (Fig. 20b) followed on such a map by the pair of values $V_c$ and $K$ perturbed in a simulation of the preferred embodiment of the control method according to the invention (the side coloured bars refer to the values of the produced photovoltaic power);

Figure 21 shows the variation of the control voltage $V_c$ obtained through a simulation of the single variable P&O method (operating on the voltage $V_c$) controlling the device of Figure 1 having the third setting of the other parameters, so as to satisfy constraints [1]-[5];

Figure 22 shows the variations of the produced photovoltaic power in the simulation of Figure 21 (Fig. 22a) and in a simulation of the preferred embodiment of the method according to the invention controlling the device of Figure 1 having the second setting of the other parameters, so as to satisfy constraints [1]-[5] (Fig. 22b);

Figure 23 shows a time graph (Fig. 23a) indicative whether the constraint [5] in the simulation of Figure 22b is violated or not, and the variations of the control voltage $V_c$ (Fig. 23b) and gain $K$ (Fig. 23c) obtained in the simulation of Figure 22b; and

Figure 24 shows a schematic block diagram of the control architecture of a FCS system to which a second preferred embodiment of the control method according to the invention is applied.

In the Figures, alike elements are indicated by same reference numbers.

As said, the inventors have developed an adaptive P&O method that, regulating two or more operation variables, maintains the operation point of the electric power generation system within a feasibility region defined by the fulfilment of one or more operation constraints and that, simultaneously, drives the system toward the area ensuring that the optimal value of the operating performance (e.g., in case of a system comprising a photovoltaic source, the method ensures the maximum photovoltaic power generatable by the system, i.e. it is a MPPT P&O method) at the current operation conditions (e.g. at the current environmental conditions) is reached. By way of example, but not by way of limitation, in case of a system comprising a photovoltaic source, the method may for instance perturb the pair of variables {K,Vc} and observe the photovoltaic power and the constraints [1]-[5] to the end of maximising the former and meeting the latter.

As previously described, the solution hypothesis corresponding to the set of the parameters listed in Table I for a photovoltaic single stage inverter appears feasible (in the sense that it meets all the constraints [1]-[5]) within the range of sunlight S [0,1, 1] kW/m² and at temperature $\theta$ equal to 310K. At the operation conditions imposed by a sunlight S=100W/m² and a temperature $\theta$=285K, the solution hypothesis is still feasible but, due to the fact that the optimisation procedure (as described in WO2007/007360 A2) has been made in a sunlight range but at a fixed temperature value, it is not capable to extract the maximum photovoltaic power at different pairs of values {S, $\theta$}.

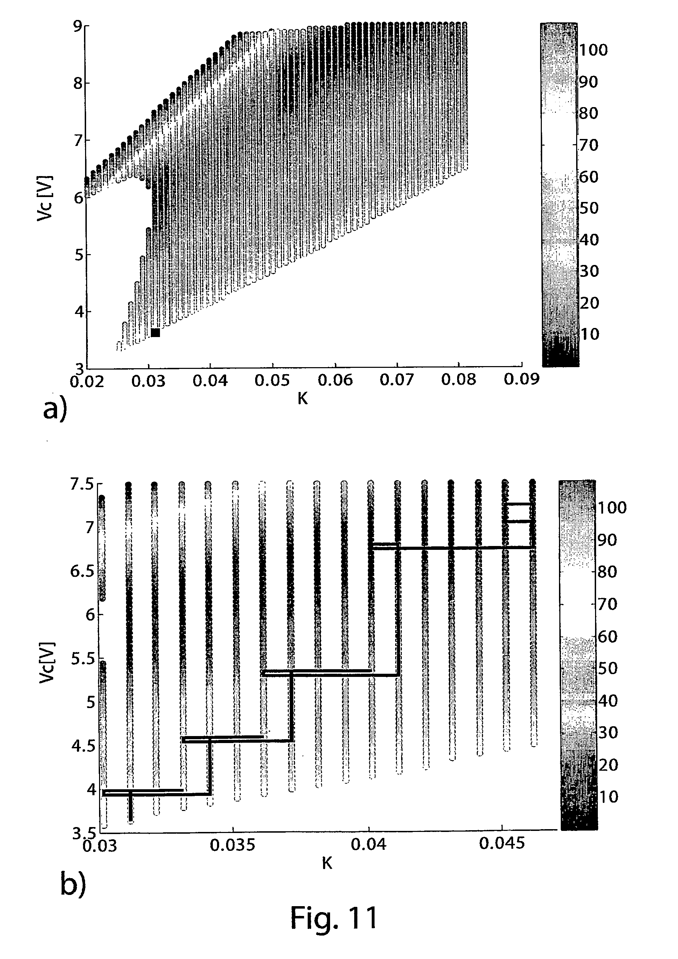

By way of example, when the operation conditions are S=100W/m² and $\theta$=280K, the graph of Figure 11 a represents the feasibility map and shows the location of such solution hypothesis (corresponding to the black square) and the area with the dark red points representing, in compliance with the side colour bar, the region with the highest produced photovoltaic power. The solution hypothesis is still feasible, even if it is close to the lower border of the acceptability region defined by constraints [1]-[5], but the presence of a non linear border on the left side points out a difficulty in reaching the dark red region by only varying the control voltage $V_c$. This is confirmed by the graph of Figure 12, related to the same case as of Figure 11, and obtained by means of a PSIM simulation by using the single variable P&O control method operating on the voltage $V_c$, as described in WO2007/007360 A2: such method increases the value of the voltage $V_c$ until a constraint violation is reached, and in that instant (namely after 1,7 seconds), the method repeatedly increases and decreases the value of the voltage $V_c$, continuously passing from the last feasible value to the first not feasible one and vice versa. The result shown in Figure 12 takes account of the instant values of the electrical quantities and hence it shows the reaching of the non linear constraint located on the left side of Figure 11a, differently obtained through an analytical mean value model, for values of $V_c$ lower than those inferrable from Figure 11a.

Differently, the adaptive control method according to the invention based on the multi-variable P&O technique allows to maximise the photovoltaic power meeting constraints [1]-[5]. In particular, the method alternatively perturbs the control voltage $V_c$ and the gain K as follows.

A variable is repeatedly perturbed with the same perturbation sign (either increase or decrease) until a reduction in the photovoltaic power is detected. At that point, instead of changing the perturbation sign (as in the method described in WO2007/007360 A2), the other variable is perturbed with a sign opposite to that of the last perturbation of the same variable.

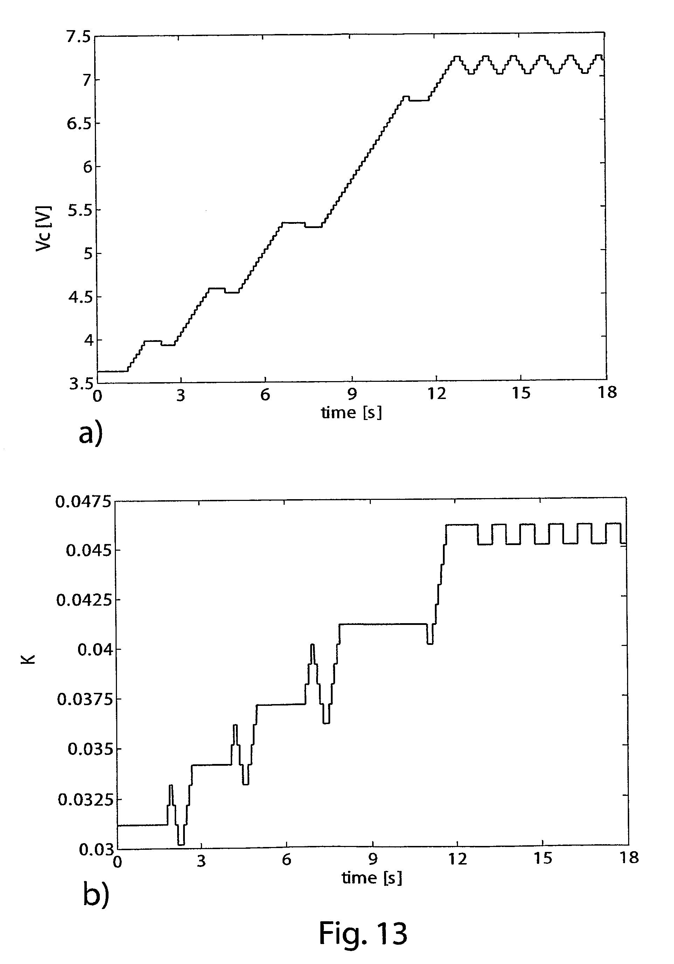

This is shown in Figure 11b and by the final part of the waveforms of Figure 13, both always referred to the same example ($S$=100W/m$^2$ and $\theta$=280K): a sequence of increase perturbations of the value of $V_c$ is followed by a single perturbation of decrease of the value of $K$; subsequently a sequence of decrease perturbations of the value of $V_c$ (hence with sign opposite to that of the last preceding perturbation of $V_c$) is followed by a single perturbation of increase of the value of $K$ (hence with sign opposite to that of the last preceding perturbation of $K$). This leads to a sort of "limit cycle" surrounding the area of the maximum photovoltaic power: the path of the operating point with the final cycle converges toward the region with the highest photovoltaic power, as it is shown in Figure 11 b.

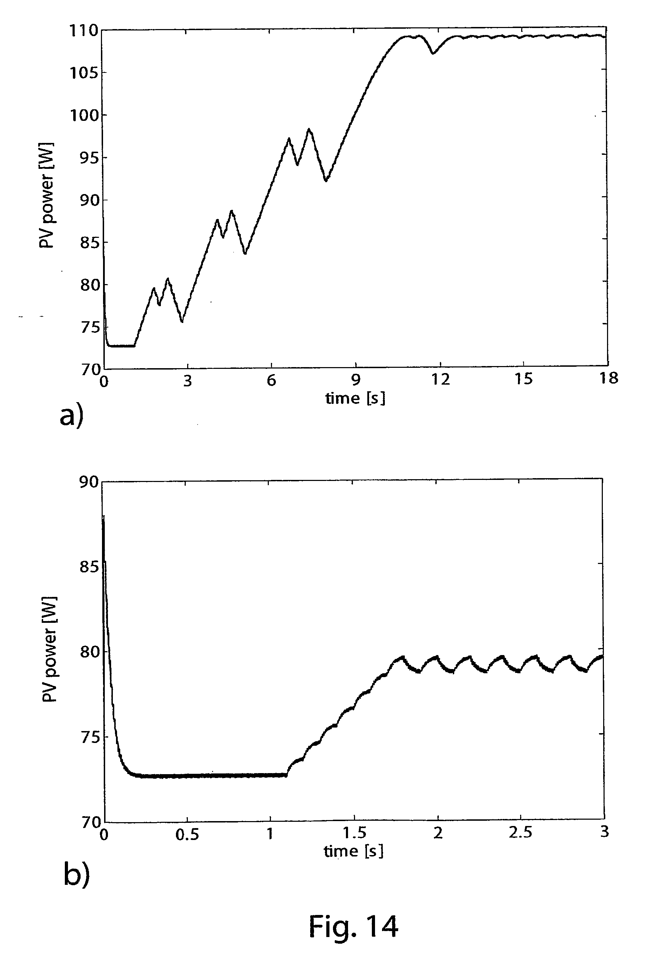

Figure 14 compares the photovoltaic powers produced through the single variable P&O control method of WO2007/007360 A2 and through the multi-variable P&O control method according to the present invention, pointing out the advantage in terms of a significant gain of photovoltaic power, larger than 30%.

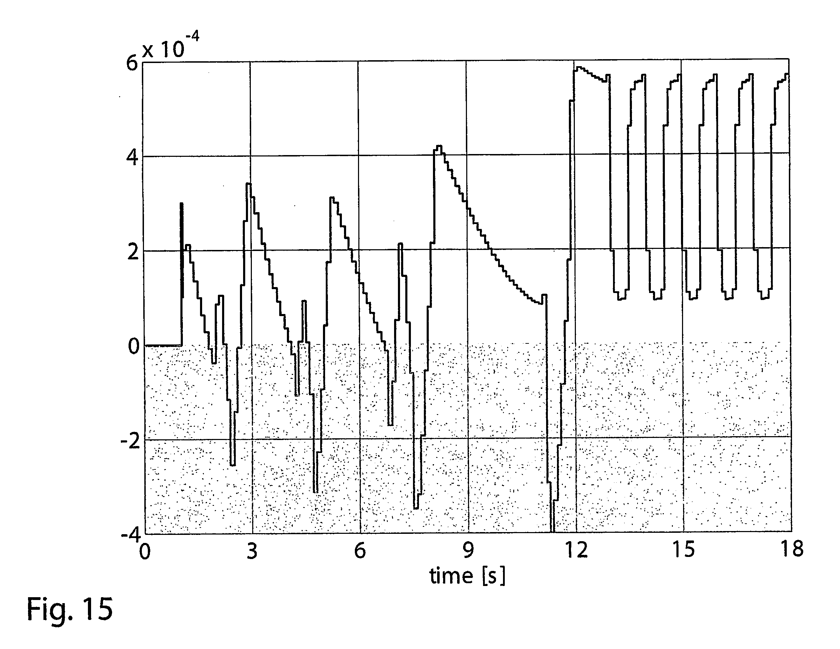

The graph of Figure 15 points out how the method according to the invention manages violations of the constraints, showing the temporary violation of the constraint [5], that occurs when the graph of Figure 15 falls below zero (i.e. when it invades the shaded region): when the constraint [5] is violated, the perturbed variable is temporarily frozen (e.g. $V_c$ in Figure 13); subsequently, the other variable *(e.g. K* in Figure 13) is perturbed in order to detect a new way leading to further improvements of the photovoltaic power without violating any constraint [1]-[5]. Preferably, when a perturbation of a variable causes the violation of the constraints, the value of the same variable is set back to the last value before the perturbation (that caused the violation of the constraints), i.e. the same variable is set back and frozen at the last value that met the constraints (i.e. that ensured feasibility) and the other variable is perturbed in the same direction (i.e. with the same sign) of its last perturbation (i.e. of its immediately preceding perturbation).

In general, a first preferred embodiment of the adaptive control method according to the invention, based on P&O technique carried out on two variables, indicated as X and Y, comprises in the order the following example steps, wherein the signs SX and SY of the perturbations assume values '*' and $\overline{*}$, which represent '+' and '-', and wherein P is a performance indicative function the value of which must be maximised (e.g., in case of an inverter connected to a photovoltaic generator, it may be the power extracted from the same):

A. having a pair of initial values {X,Y}, and assuming it as current pair of values, and initialising the signs SX and SY of the related perturbations to one of the two values '+' and '-';
B. verifying the feasibility of the current pair of values {X,Y}, i.e. verifying that one or more feasibility constraints are met: if the verification gives a negative outcome, performing step L, otherwise prosecuting to step C;
C. perturbing variable X with sign SX;
D. after a time span $T_{wait\_X}$, observing the difference $\Delta P$ in the value of the function P after the perturbation of X;
E. if $\Delta P$>0, performing step B (i.e. r eturning to perform th e method starting from step B);

F. if $\Delta P$<0, freezing variable X at its current value (after the perturbation) and setting $SX = \overline{*}$ (i.e. reversing the sign SX of the perturbation of X);
G. verifying the feasibility of the current pair of values {X,Y} (i.e. verifying that one or more feasibility constraints are met): if the verification gives a negative outcome, performing step L, otherwise prosecuting to step H;
H. perturbing variable Y with sign SY;
I. after a time span $T_{wait\_Y}$, observing the difference $\Delta P$ in the value of the function P after the perturbation of Y;
J. if $\Delta P$>0, performing step G (i.e. returning to perform the method starting from step G);

K. if $\Delta P$<0, freezing variable Y at its current value (after the perturbation), setting $SY = \overline{*}$ (i.e. reversing the sign SY of the perturbation of Y), and performing step B (i.e. returning to perform the method starting from step B);
L. if the last perturbed variable is X, performing steps M, otherwise (the last perturbed variable is Y) performing steps N;
M.1 perturbing variable Y with sign SY;
M.2 after a time span $T_{wait\_Y}$, verifying the feasibility of the current pair of values {X,Y} (i.e. verifying that one or more feasibility constraints are met);
M.3 if the verification M.2 gives a positive outcome ({X,Y} feasible), performing step H (i.e. returning to perform the method starting from step H);
M.4 if the verification M.2 gives a negative outcome ({X,Y} not feasible), removing the last perturbation of Y (i.e.

returning to the preceding value of Y), setting $SY = \overline{*}$ (i.e. reversing the sign SY of the perturbation of Y) and perturbing variable Y with sign SY;

M.5 after a time span $T_{wait\_Y}$, verifying the feasibility of the current pair of values {X,Y} (i.e. verifying that one or more feasibility constraints are met);

M.6 if the verification M.5 gives a positive outcome ({X,Y} feasible), performing step H (i.e. returning to perform the method starting from step H);

M.7 if the verification M.5 gives a negative outcome ({X,Y} not feasible), removing the last perturbation of Y (i.e. returning to the preceding value of Y) and the last perturbation of X (i.e. returning to the preceding value of X), setting $SY = \overline{*}$ (i.e. reversing the sign SY of the perturbation of Y), and performing step G (i.e. returning to perform the method starting from step G);

N.1 perturbing variable X with sign SX;

N.2 after a time span $T_{wait\_X}$, verifying the feasibility of the current pair of values verifying the feasibility of the current pair of values {X,Y} (i.e. verifying that one or more feasibility constraints are met);

N.3 if the verification N.2 gives a positive outcome ({X,Y} feasible), performing step C (i.e. returning to perform the method starting from step C);

N.4 if the verification N.2 gives a negative outcome ({X,Y} not feasible), removing the last perturbation of X (i.e. returning to the preceding value of X), setting $SX = \overline{*}$ (i.e. reversing the sign SX of the perturbation of X) and perturbing variable X with sign SX;

N.5 after a time span $T_{wait\_X}$, verifying the feasibility of the current pair of values {X,Y} (i.e. verifying that one or more feasibility constraints are met);

N.6 if the verification N.5 gives a positive outcome ({X,Y} feasible), performing step C (i.e. returning to perform the method starting from step C);

N.7 if the verification N.5 gives a negative outcome ({X,Y} not feasible), removing the last perturbation of X (i.e. returning to the preceding value of X) and the last perturbation of Y (i.e. returning to the preceding value of Y), setting $SX = \overline{*}$ (i.e. reversing the sign SX of the perturbation of X), and performing step B (i.e. returning to perform the method starting from step B).

Figures 11 and 13-23 refer to such first preferred embodiment of the method.

A second preferred embodiment of the adaptive control method according to the invention, wherein when a perturbation of a variable causes the violation of the constraints, the value of the same variable is set back to the last value before the perturbation (that has provoked the violation of the constraints) before freezing the same variable, and the other variable is perturbed in the same direction (i.e. with the same sign) of its last perturbation (i.e. of its immediately preceding perturbation), instead of the opposite direction as in the first preferred embodiment, may be carried out through the same steps from A to L, in the order, of the first preferred embodiment, whereas steps M and N may be modified as follows, taking also account of two further temporary variables LAST_SX and LAST_SY which are also suitably initialised and updated during steps A, F, and K. In this regard, the second p referred embodiment of the adaptive control method according to the invention provides that:

step A is modified as follows

A'. having a pair of initial values {X,Y}, and assuming it as current pair of values, initialising the signs SX and SY of the related perturbations to one of the two values '+' and '-', and initialising the temporary variables LAST_SX and LAST_SY so that they are equal to the values of the signs SX and SY (LAST_SX= SX, LAST_SY= SY)

step F is modified as follows

F'. if $\Delta P < 0$, freezing variable X at its current value (after the perturbation), setting LAST_SX= SX and setting $SX = \overline{*}$ (i.e. reversing the sign SX of the perturbation of X);

and step K is modified as follows

K'. if $\Delta P < 0$, freezing variable Y at its current value (after the perturbation), setting LAST_SY= SY, setting $SY = \overline{*}$ (i.e. reversing the sign SY of the perturbation of Y), and performing step B (i.e. returning to perform the method starting from step B).

Steps M are modified in this way:

M'.1 perturbing variable X with sign opposite to LAST_SX (i.e. equal to SX, so as to set the value of X back to the last value before the last perturbation (that has provoked the violation of the constraints) and freezing variable X to such a value;
M'.2 perturbing variable Y with sign equal to LAST_SY (i.e. opposite to SY);
M'.3 after a time span $T_{wait\_Y}$, verifying the feasibility of the current pair of values {X,Y} (i.e. verifying that one or more feasibility constraints are met);
M'.4 if the verification M'.3 gives a positive outcome ({X,Y} feasible), setting SY=LAST_SY and performing step H (i.e. returning to perform the method starting from step H).

Although it is very unlikely that the verification M'.3 gives a negative outcome, however the second preferred embodiment of the adaptive control method according to the invention preferably further comprises the following steps after step M'.4:

M'.5 if the verification M'.3 gives a negative outcome ({X,Y} not feasible), removing the last perturbation of Y (i.e. returning to the preceding value of Y), setting $LAST\_SY =: \overline{*}$ (i.e. reversing the sign LAST_SY of the last perturbation of Y) and perturbing variable Y with sign LAST_SY;
M'.6 after a time span $T_{wait\_Y}$, verifying the feasibility of the current pair of values {X,Y} (i.e. verifying that one or more feasibility constraints are met);
M'.7 if the verification M'.6 gives a positive outcome ({X,Y} feasible), setting SY=LAST_SY and performing step H (i.e. returning to perform the method starting from step H);
M'.8 if the verification M'.6 gives a negative outcome ({X,Y} not feasible), removing the last perturbation of Y (i.e. returning to the preceding value of Y), setting $LAST\_SY = \overline{*}$ (i.e. reversing the sign LAST_SY of the last perturbation of Y), and performing steps N.

Steps N are modified in this way for the second preferred embodiment of the adaptive control method according to the invention:

N'.1 perturbing variable Y with sign opposite to LAST_SY (i.e. equal to SY, so as to set the value of Y back to the last value before the last perturbation (that has provoked the violation of the constraints) and freezing variable Y at such a value;
N'.2 perturbing variable X with sign equal to LAST_SX (i.e. opposite to SX);
N'.3 after a time span $T_{wait\_X}$, verifying the feasibility of the current pair of values {X,Y} (i.e. verifying that one or more feasibility constraints are met);
N'.4 if the verification N'.3 gives a positive outcome ({X,Y} feasible), setting SX=LAST_SX and performing step C (i.e. returning to perform the method starting from step C).

Although it is very unlikely that the verification N'.3 gives a negative outcome, however the second preferred embodiment of the adaptive control method according to the invention preferably further comprises the following steps after step N'.4:

N'.5 if the verification N'.3 gives a negative outcome ({X,Y} not feasible), removing the last perturbation of X (i.e. returning to the preceding value of X), setting $LAST\_SX = \overline{*}$ (i.e. reversing the sign LAST_SX of the last perturbation of X) and perturbing variable X with sign LAST_SX;
N'.6 after a time span $T_{wait\_X}$, verifying the feasibility of the current pair of values {X,Y} (i.e. verifying that one or more feasibility constraints are met);
N'.7 if the verification N'.6 gives a positive outcome ({X,Y} feasible), setting SX=LAST_SX and performing step C (i.e. returning to perform the method starting from step C);
N'.8 if the verification N'.6 gives a negative outcome ({X,Y} not feasible), removing the last perturbation of X (i.e. returning to the preceding value of X), setting $LAST\_SX = \overline{*}$ (i.e. reversing the sign LAST_SX of the last perturbation of X), and performing steps M.

The second preferred embodiment of the adaptive control method according to the invention has a better convergence dynamics with respect to the first preferred embodiment.

It is immediate to adapt the preceding example steps to the case of a number of control variables larger than 2; for instance, for the photovoltaic system of Figure 1, the control variables could be any sub-set selected from the group comprising, besides the control voltage $V_c$ and the gain $K$ of the sensor 4 for sensing the inverter output voltage, also the gain $Kg$ of the sensor 5 for sensing the photovoltaic field voltage, the gain $R_s$ of the sensor 3 for sensing the inverter output current, and the time constant $\tau$ of the integrator 9. Similarly, it is immediate to adapt the preceding example steps to the case of a different optimisation of the performance indicative function, as for instance in the case where the optimisation consists in a minimisation of the function P or in maintaining a desired value (as it will be illustrated below with reference to the application of the control method according to the invention to a fuel cell system).

In this regard, it is immediate to generalise the preceding example steps stating that the method according to the invention perturbs at least two controllable variables so as to make a performance indicative function of any electric power generation system (in the previous case the function P) assume a value as much close to an optimal value as possible (that in the previous case is a maximum value, but that in other cases may be a minimum value or a target value of the performance indicative function); in particular, a first variable is repeatedly perturbed with a constant sign of perturbation when it is detected that the distance of the performance indicative function value (obtained after the perturbation) from the optimal value is decreasing, whereas, as soon as it is detected that such distance is increased, a second variable different from the first one is perturbed with a perturbation sign opposite to that of the last perturbation of the same second variable. In the case where the optimal value is a maximum value, the distance is equal to the difference between the maximum value obtainable for the function P and the current value of P; such distance decreases if $\Delta P>0$ and increases if $\Delta P<0$; obviously, in the case where the optimal value is a minimum value the distance increases if $\Delta P>0$ and decreases if $\Delta P<0$; finally, the generalised method preferably takes account of one or more constraints which must be met upon the perturbations imposed to the at least two controlled variables, anticipating, as it were, the alternation of perturbation among the controllable variables if at least one of such constraints is violated.

In order to improve the inverter performance in given ranges of both sunlight S and temperature $\theta$, e.g. included within the limit values $S_{min}$=100W/m$^2$, $S_{max}$=1kW/m$^2$ and $\theta_{min}$=280K, $\theta_{max}$=310K, the inventors have launched a Montecarlo simulation for searching new sets of the parameters {$K$, $K_g$, $V_c$, $R_s$, $\tau$} in the same search space of WO2007/007360 A2, that has been defined so as to take account of the discretisation of the values of the components. Ranges and increases (or steps) of the parameters are reported in Table II.

Table II

|  | K | K$_g$ | V$_c$ [V] | R$_s$ [$\Omega$] | $\tau$=R$_1$C$_1$ [$\mu$s] |
|---|---|---|---|---|---|
| **Ranges** | [0, 0,15] | [0, 0,07] | [0, 24] | [0, 1,965] | [0,3, 30,3] |
| **Increases** | 0,001 | 0,001 | 0,1 | 0,001 | 0,1 |

After 10$^4$ prove, ten possible solutions have been determined, among which the two reported in Table III have been selected. They ensure the maximum (solution 1) and the minimum (solution 2) sum of the photovoltaic powers produced at the sunlight levels $S_{min}$ and $S_{max}$ and at temperature $\theta_{max}$. Productivity at the maximum temperature has been considered according to the optimisation criterion of WO2007/007360 A2.

Table III

|  | K | K$_g$ | V$_c$ [V] | R$_s$ [$\Omega$] | $\tau$=R$_1$C$_1$ [$\mu$s] |
|---|---|---|---|---|---|
| **Solution 1** | 0,080 | 0,026 | 18,0 | 0,373 | 29,3 |
| **Solution 2** | 0,071 | 0,009 | 12,3 | 0,367 | 16,7 |

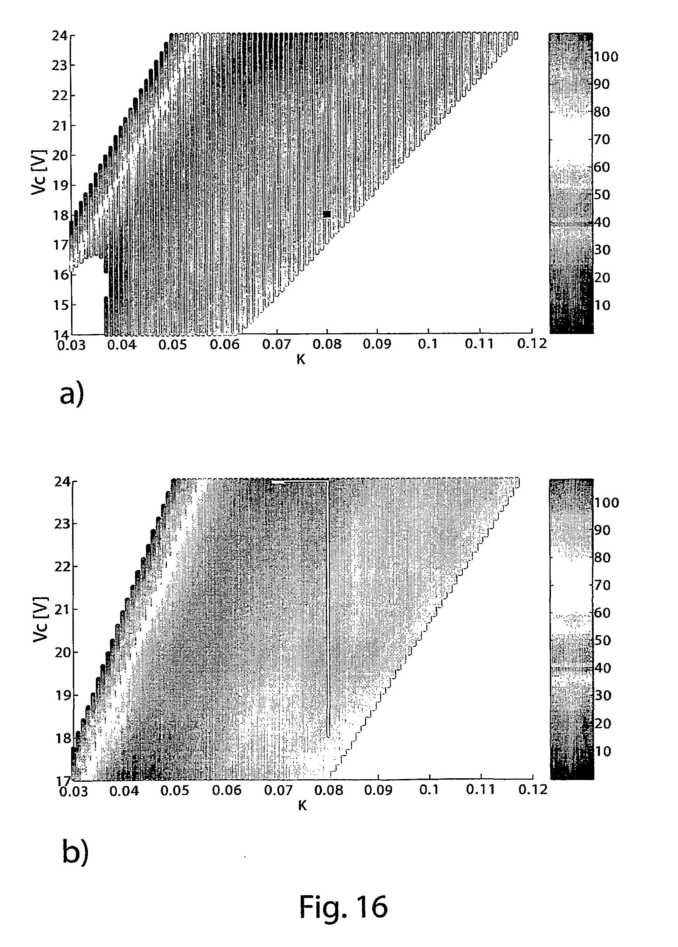

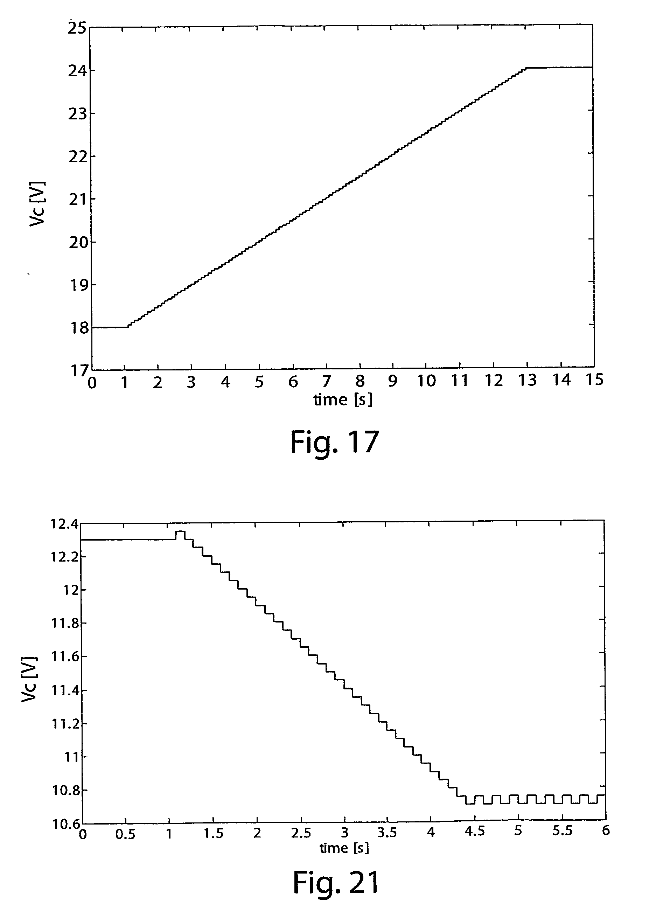

Assuming Solution 1 of Table III as new solution hypothesis, at the operation conditions of $S$=100W/m$^2$ and $\theta$=280K, the graph of Figure 16a represents the feasibility map and shows the position of such solution hypothesis (corresponding to the black square) and the area with the dark red points representing, in compliance with the side colour bar, the region with the highest produced photovoltaic power. Such solution hypothesis is feasible and it appears possible that an increase only of the voltage $V_c$ is capable to lead to the region with the highest photovoltaic power. Nevertheless, the voltage $V_c$ must remain below 24V (see Table II) due to the implementation physical constraints, so that the absolute maximum photovoltaic power cannot be reached by the single variable P&O control method operating on the voltage $V_c$, as described in WO2007/007360 A2, as shown by Figures 16a and 17.

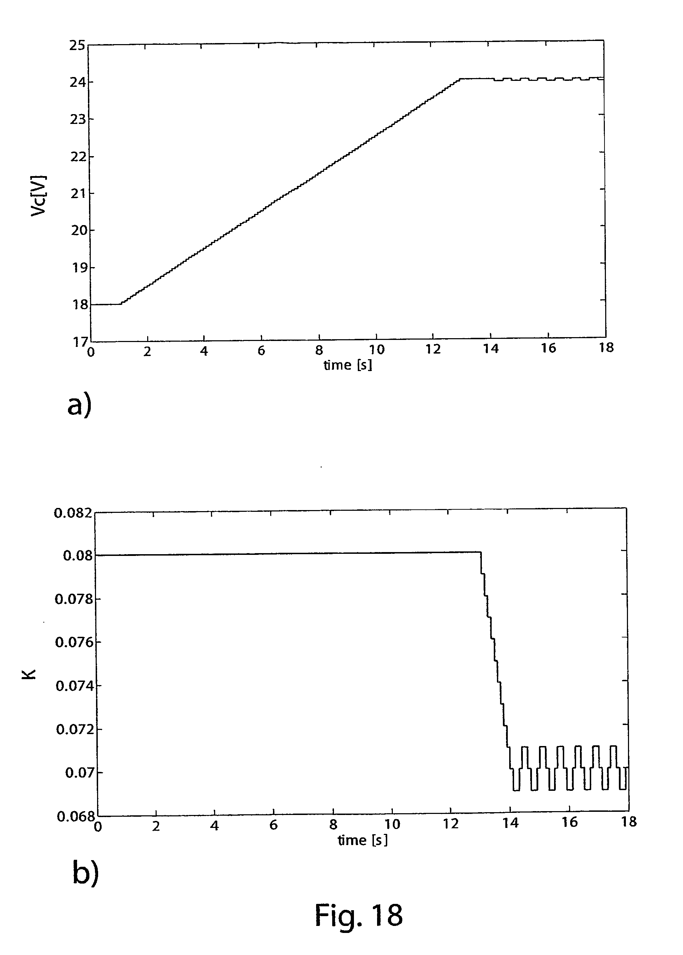

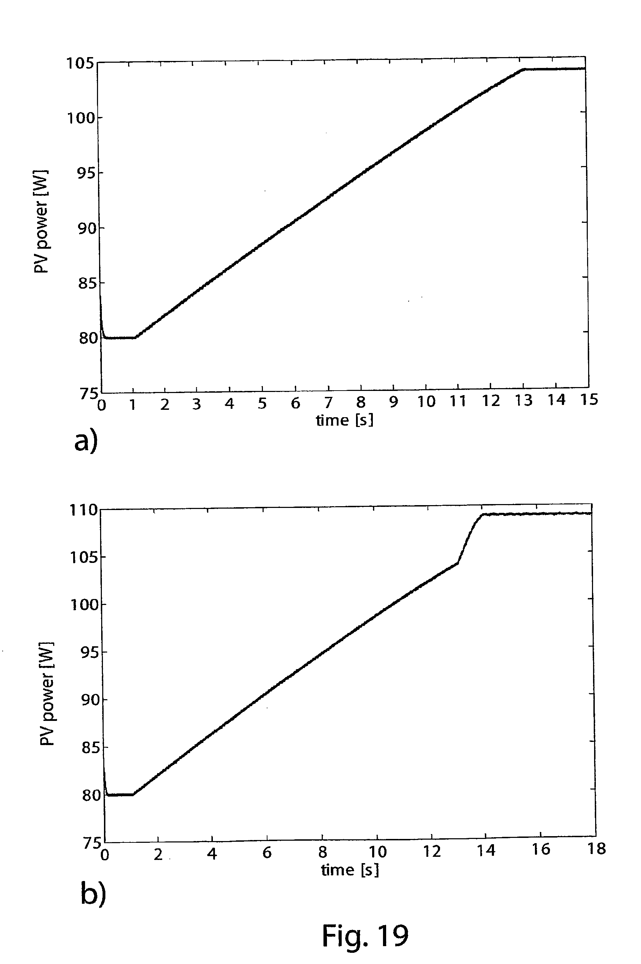

Differently, the adaptive control method according to the invention based on the multi-variable P&O technique still demonstrates as advantageous, as confirmed by the results obtained with PSIM simulations shown in Figures 16b and 18, wherein it is evident that the perturbation of $K$ at about $t$=13 seconds increases by 5% the production of photovoltaic power, as shown in Figure 19.

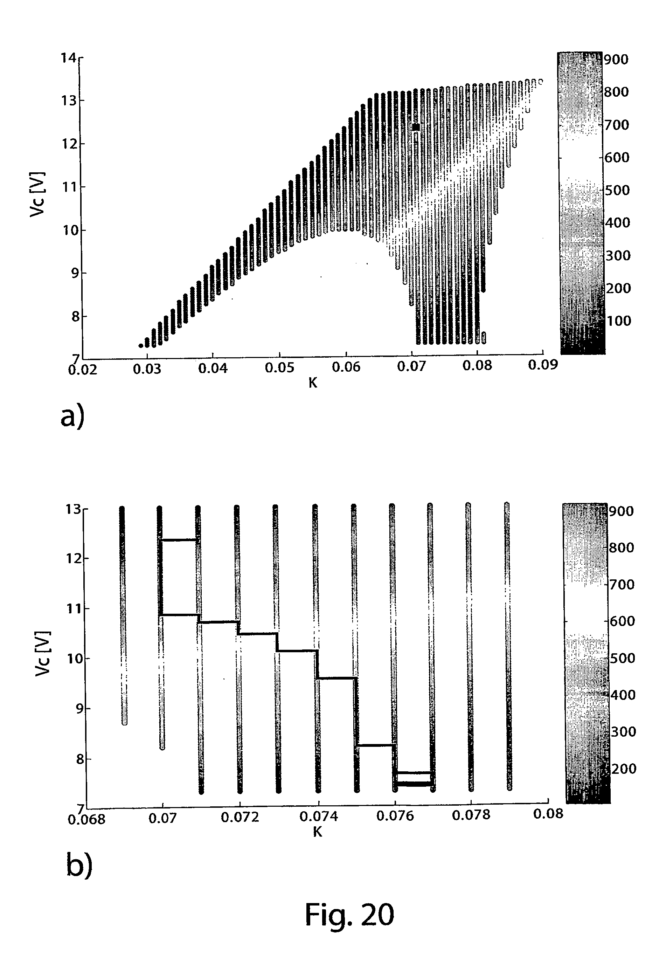

Similarly, assuming Solution 2 of Table III as new solution hypothesis, at the operation conditions of $S$=1000W/m$^2$ and $\theta$=280K, the graph of Figure 20a represents the feasibility map and shows the location of such solution hypothesis (corresponding to the black square), pointing out the difficulties in reaching the area with the dark red points representing, in compliance with the side colour bar, the region with the highest photovoltaic power produced through the single variable P&O control method operating only on the voltage $V_c$, as described in WO2007/007360 A2 and shown by Figure 21.

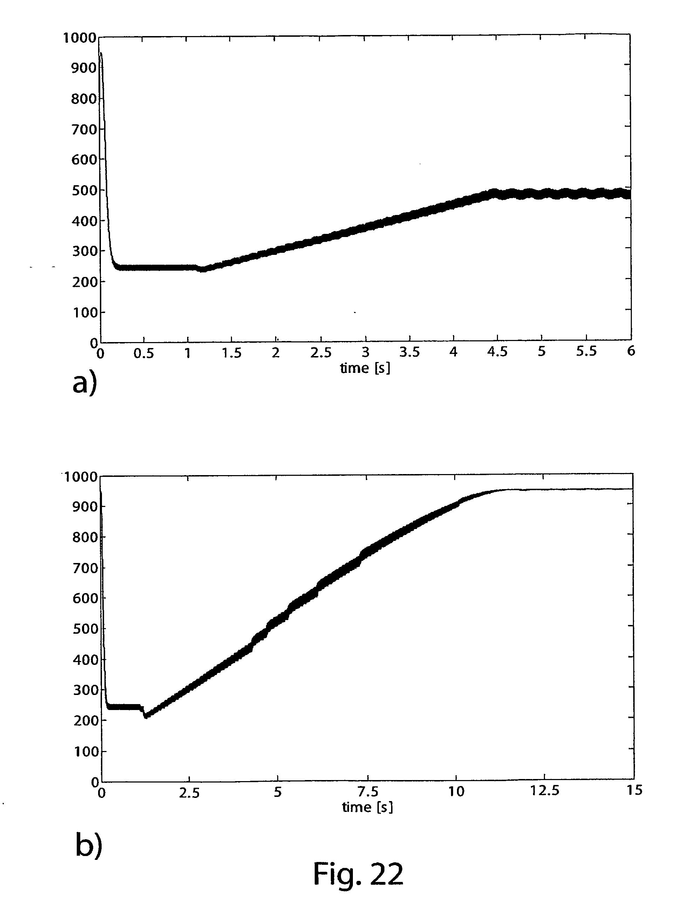

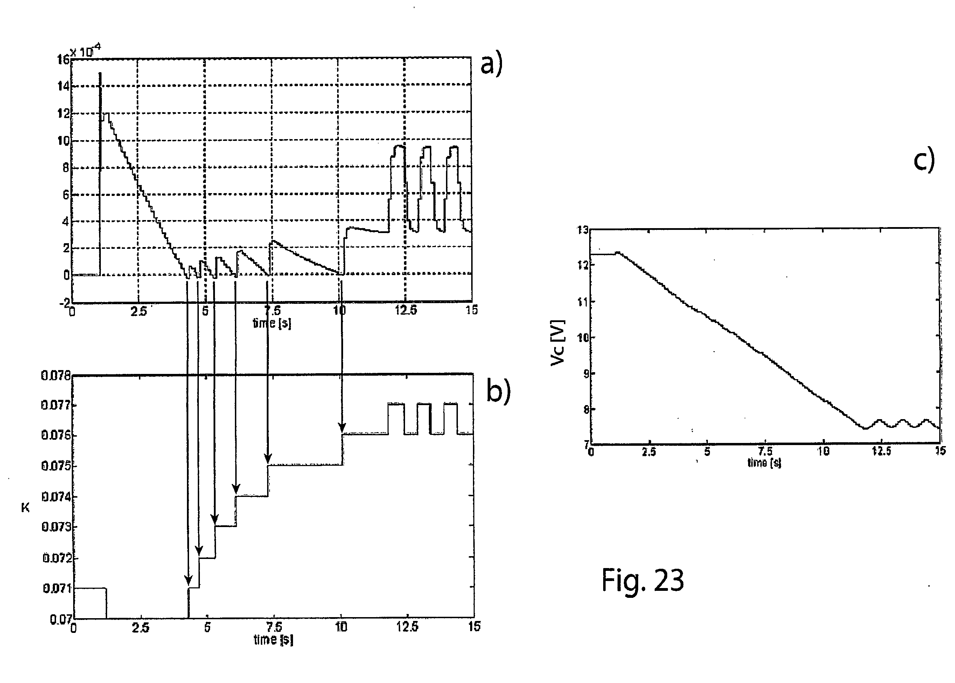

Differently, as shown in Figure 22, the adaptive control method according to the invention based on the multi-variable P&O technique allows to obtain an increase by about 50% of the photovoltaic power. In particular, Figures 20b and 23 show how the method according to the invention allows the photovoltaic generation system to move along the feasibility region borders defined by the constraints [1]-[5] through perturbations of $K$ (see arrows in Figure 23) corresponding to a temporarily frozen value of $V_c$ and to a perturbation of $K$ as soon as the constraint [5] is violated. Instead, the single variable P&O control method operating only on the voltage $V_c$, remains trapped in the border imposed by the constraints with $V_c$ moving around the limit value imposed by the constraint [5] (see Fig. 21).

A second preferred embodiment of the P&O adaptive control method according to the invention is applied to a PEM-FCS system.

An adaptive control method through the P&O technique is capable to greatly improve performance and reliability of FCS systems regulating two control variables of the PEM cells constituted, for instance, by the speed $\omega_{cmd}$, controlled by the compressor controller, and the opening $\beta$ of the back pressure valve 26 of the cathode 22.

In particular, the second preferred embodiment of the method in the present invention proposes to operate on the actuators of the FCS system which are regulated so as to make the FCS system operate at the optimal setting points, as determined by imposing that the air excess $\lambda$ is set equal to about 2, as described by J.T. Pukrushpan, A.G. Stefanopoulou, and H.Peng in "Control of fuel cell breathing", IEEE Control Systems Magazine, April 2004, pp.30-46.

The P&O technique proposed by document WO2007/007360 A2 may be applied to the control of the fuel cells with reference to the regulation of either the speed $\omega_{cmd}$ controlled by the compressor controller or the opening $\beta$ of the cathode back pressure valve.

In this regard, the inventors have conducted some simulations of the adaptively controlled FCS system in order to demonstrate the effectiveness of the P&O technique when compared with the classical feedforward control technique based on the use of the lookup tables.

A control based on the combination of the lookup tables with the P&O technique improves the FCS system performance in terms of maintenance of a prefixed level of target power. The P&O technique reduces the difference $\Delta P$ between the effective net power and the target one in presence of parameter variations, e.g. of the electroactive area, with respect to the corresponding value calculated only through the lookup tables. In any case this is made by meeting the constraints on the value of the air excess guaranteeing the correct cell operation.

However, the sole perturbation of the compressor speed $\omega_{cmd}$ do not always ensure the maintenance of the target power $P_{target}$; similar considerations are valid in the case where the P&O control is made on the opening $\beta$ of the back pressure valve, keeping the value of the compressor speed $\omega_{cmd}$ constant, preferably equal to the value provided by the lookup tables.

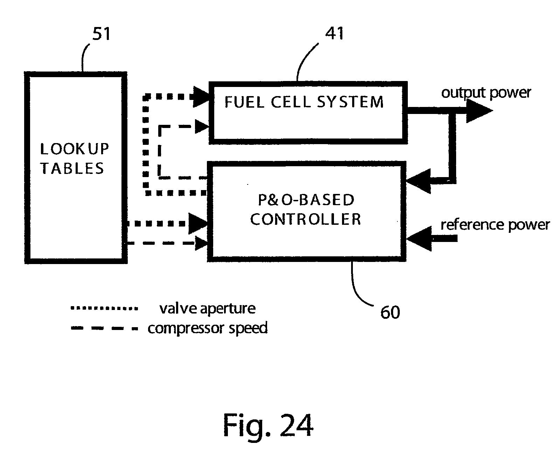

Figure 24 shows a block diagram of the architecture for controlling a FCS system to which the second preferred embodiment of the P&O adaptive control method according to the invention is applied. Such architecture comprises a P&O controller 60 that, on the basis of the lookup tables 51 and of the output power of the FCS system 41, regulates in an adaptive way the values of the compressor speed $\omega_{cmd}$ and of the opening $\beta$ of the cell back pressure valve of the FCS system 41 provided by the lookup tables 51, by perturbing them according to the P&O technique, in order to take account of the uncertainties of the system and of the drifts of the electrochemical reaction parameters with respect to the "nominal" operation conditions.

The inventors have conducted some simulations by fixing the desired level $P_{target}$ of output power of the FCS system 41 and simulating the variation of some parameters, among which the value of the electroactive area, which are actually neither controllable nor measurable and which affect the electrical power produced by the FCS system.

The control variables $\omega_{cmd}$ and $\beta$ are perturbed, starting from the values provided by the lookup tables 51, with a frequency sufficiently low with respect to the dynamics of the whole FCS system (e.g., equal to the half of the frequency with which the transient of the FCS system terminate). Similarly to what already seen, the variables $\omega_{cmd}$ and $\beta$ are not simultaneously perturbed, but the perturbation is carried out with the same strategy described above with reference to the first embodiment of the method applied to a photovoltaic source. Such alternate perturbation of the two variables ensures a gradual change of the FCS system behaviour and a steady state approximating a limit cycle. Management of the constraints, fixed in order to ensure a safe operation of both the cell, e.g. n terms of pressures and air excess, and the compressor, is the same as described above with reference to the photovoltaic source.

The results of the simulations confirm also in this case that the net output power of the FCS system obtained through the multi-variable P&O control according to the invention is always closer to the target value in than the one ensured by a conventional feedforward control, stabilising the FCS system operation point with lower differences $\Delta P$ even in rather sever operation conditions.

As in the photovoltaic case , the sequence of pairs $\{\omega_{cmd}, \beta\}$ at steady state determined a sort of rectangular "limit cycle" made up by a sequence of operating points (e.g. pairs $\{w_{cmd}, \beta\}$) cyclically following each other. A further embodiment of the multi-variable P&O adaptive control method provides that the amplitudes of the perturbations are depending on the absolute value of the difference $\Delta P$, e.g. using the following linear relationships:

$$\Delta\beta = a + b \cdot \Delta P$$

$$\Delta\omega_{cmd} = c + d \cdot \Delta P$$

Similarly to the photovoltaic case, hence, the adaptive control method, and the related controller device, according to the invention, applied to a PEM-FCS system carries out a control according to the P&O technique, starting from the values provided by lookup tables, of at least two controllable variables of the system, preferably the compressor speed $\omega_{cmd}$ and the opening $\beta$ of the back pressure valve, thus greatly improving performance and reliability of the PEM-FCS system upon variation of the operation conditions imposed by uncontrollable or not measurable exogenous and/or endogenous variables affecting the cell performance.

The present invention has been described, by way of illustration and not by way of limitation, according its preferred embodiment, but it should be understood that those skilled in the art can make variations and/or changes, without so departing from the related scope of protection, as defined by the enclosed claims.

**Claims**

1.  Method for controlling an electric power generation system, based on at least one energy source, in particular a renewable energy source, preferably a photovoltaic or fuel cell source, said system operating according to operating performance representable by at least one output power function, indicative of performance, having at least one optimal value, operation of said system being dependent on at least two controllable parameters (X; Y), the method being **characterised in that** it perturbs values of said at least two controllable parameters (X; Y) according to the following steps:

    a) preliminarily assuming, for each one of said at least two controllable parameters (X; Y), a perturbation sign (SX, SY) selected from a positive sign and a negative sign as sign of the immediately preceding perturbation of the respective controllable parameter, and assuming a current controllable parameter selected from said at least two controllable parameters (X; Y);
    b) applying one or more perturbations to the current controllable parameter with the same current perturbation sign, wherein before each perturbation of the current controllable parameter (X; Y) it is verified if the operation of said system meets one or more operating constraints, and when it is detected that at least one of said one or more constraints is violated step c) is executed, said one or more perturbations to the current controllable parameter being applied as long as it is detected that, after each single perturbation, a distance of a value of said at least one performance indicative function from said at least one optimal value decreases, whereas when it is detected that said distance increases, step c) is executed;
    c) assuming as current controllable parameter a controllable parameter selected from said at least two controllable parameters (X; Y) that is different from that perturbed during step b);
    d) assuming as current perturbation sign of the current controllable parameter the sign opposite to the sign of the immediately preceding perturbation of the same current controllable parameter, and returning to step b).

2.  Method according to claim 1, **characterised in that**, in step c), the current controllable parameter (X; Y) is perturbed by a respective amount of current perturbation depending on said distance of a detected value of said at least one performance indicative function (P; $\Delta P$) from said at least one optimal value ($P_{target}$).

3.  Method according to claim 1 or 2, **characterised in that**, when in step b) it is detected that at least one of said one or more constraints is violated, the method executes, before step c), the following steps:

    e) setting the current controllable parameter back to the value preceding the immediately preceding perturbation;

f) assuming as current controllable parameter a controllable parameter selected from said at least two controllable parameters (X; Y) that is different from that perturbed during step b);

g) assuming as current perturbation sign of the current controllable parameter the same sign of the immediately preceding perturbation of the same current controllable parameter, and returning to step b).

**4.** Method according to claim 1 or 2, **characterised in that**, when in step b) it is detected that at least one of said one or more constraints is violated the method executes, before step c), the following steps:

e') setting the current controllable parameter back to the value preceding the immediately preceding perturbation;

f') assuming as current controllable parameter a controllable parameter selected from said at least two controllable parameters (X; Y) that is different from that perturbed during step b);

g') assuming as current perturbation sign of the current controllable parameter the same sign of the immediately preceding perturbation of the same current controllable parameter;

h) applying a perturbation to the current controllable parameter with the current perturbation sign;

i) verifying if the operation of said system meets one or more operating constraints;

j) when in step i) it is detected that said one or more constraints are met, returning to step b);

k) when in step i) it is detected that at least one of said one or more constraints is violated, setting the current controllable parameter back to the value preceding the immediately preceding perturbation, assuming as current perturbation sign of the current controllable parameter the sign opposite to the sign of the immediately preceding perturbation of the same current controllable parameter, and returning to step b).

**5.** Method according to any one of the preceding claims, wherein the electric power generation system comprises a photovoltaic source (1) connected to a single stage inverter device, comprising switching means (M1-M4), in turn connected to an electric ac network or grid (2) having at least one phase, of pulsation frequency $\omega_{grid}$, wherein the switching means (M1-M4) periodically connects, with period $T_s$ lower than the period $T_{grid}$ corresponding to the pulsation frequency $\omega_{grid}$, the source (1), capable to output a voltage $v_g(t)$ of average value $V_9$, to the grid (2) so that the output current $i_0(t)$ of each phase of the inverter device is in phase with the voltage $v_0(t)$ of the same phase of the grid (2), the maximum value of which is $V_{o,max}$, the switching means (M1-M4) being controlled by controlling electronic means (10, 20) operating according to a control over a single switching cycle of the switching means (M1-M4), the inverter device seeing an output inductance L and comprising a sensor for sensing an output current of the inverter device having a gain $R_s$ that is connected in series to the grid (2), the controlling electronic means (10, 20) comprising:

- a resettable integrator circuit (9) having a time constant $\tau$ such that $\tau < T_s$, the input of which receives a voltage signal ($V_c$-$K_g$*$v_g$) equal to the difference between a control voltage $V_c$ and a voltage proportional by a first factor Kg to the output voltage $v_g(t)$ of the source (1),

- comparator means (14), capable to output a signal indicative of the comparison of a voltage [$R_s \cdot i_0(t)$] furnished by said sensor for sensing an output current with the sum of the output signal of the integrator circuit (9) and a voltage [$K \cdot v_0(t)$] proportional by a second factor K to the voltage $v_0(t)$ of the grid (2), and

- generator means (11, 12, 13) capable to receive the output signal from the comparator means (14) and a signal indicative of the phase of the grid (2) for providing one or more signals for controlling the switching means (M1-M4),

the electric power generation system being such to fulfil the following operating constraints:

$$- \ V_c \geq K_g V_g + \frac{\left(2V_{o,\max} - V_g\right)R_s \tau}{2L} \quad ,$$

- the input signal of the integrator circuit (9) is always positive,

- at any time instant, the input voltage of the inverter device is higher than the output voltage thereof, and

$$- \ K\left(1 - \frac{P_o(S)}{\alpha \cdot P_{g,MPP}(S_{\max})}\right) \cdot (1 - \gamma) \leq \left.\frac{V_m}{V_g}\right|_{\min} \leq \left.\frac{V_m}{V_g}\right|_{\max} \leq K\left(1 - \frac{P_o(S)}{\alpha \cdot P_{g,MPP}(S_{\max})}\right) \cdot (1 + \gamma)$$

where:

$$v_m = \left( \frac{V_c - K_g \cdot v_g}{\tau} \right) \cdot T_s$$

$P_o(S)$ is the device output average power for a set S of operation conditions,
$P_{g,MPP}(S_{max})$ is the maximum power deliverable by the source (1),
$\alpha$ is a first coefficient of overload, with $\alpha \geq 1$, and
$\gamma$ is a second coefficient, with $\gamma < 1$,

the method being **characterised in that** said at least one performance indicative function of the system is a photovoltaic power generated by the system, **in that** said at least one optimal value is a maximum photovoltaic power generatable by the system, and **in that** said at least two controllable parameters are selected from the group comprising the gain $R_s$ of the sensor for sensing an output current of the inverter device, the time constant $\tau$, the control voltage $V_c$, the first factor Kg, and the second factor K.

6. Method according to claim 5, wherein the single stage inverter device is connected to, instead of an electric ac network or grid (2) having at least one phase, an ac load having at least one phase, of pulsation frequency $\omega_{grid}$, and wherein the voltage $v_0(t)$ is, instead of the voltage of a phase of the grid (2), a reference voltage of a phase of said load.

7. Method according to claim 5 or 6, **characterised in that** the electric power generation system is such to further fulfil at least one of the following two operating constraints:

   - the control voltage $V_c$ and the first factor $K_g$ are such that

$$V_c > K_g \left( V_g + \Delta V_g \right)$$

   where $\Delta V_g$ is the peak-to-peak amplitude of the oscillation of the voltage $v_g(t)$;
   - the second factor K is such that

$$V_g - \Delta V_g > \left( 1 + K \right) \cdot V_{o,max}$$

8. Method according to any one of claims 5 to 7, **characterised in that** said at least two controllable parameters consist in or comprise the control voltage $V_c$ and the second factor K.

9. Method according to any one of claims 1 to 4, wherein the electric power generation system is a Fuel Cell System, or FCS, comprising a cell stack (23), to which a compressor (20) supplies pressurised air, a pressure inside the stack (23) being regulated by a speed $\omega_{cmd}$ of the compressor (20) and an opening $\beta$ of a back-pressure valve (26), the system comprising a controller (60) which receives from one or more lookup tables (51) respective nominal values of the speed $\omega_{cmd}$ and opening $\beta$ corresponding to a target value $P_{target}$ of output power of the system, the method being **characterised in that** said at least one performance indicative function is an output power $P_{net}$ generated by the system, **in that** said at least one optimal value is the target power value $P_{target}$, and **in that** said at least two controllable parameters consist in or comprise the speed $\omega_{cmd}$ of the compressor (20) and the opening $\beta$ of the back-pressure valve (26).

10. Method according to claim 9, **characterised in that** said one or more operating constraints are selected from the group comprising the following three:

    - the speed $\omega_{cmd}$ of the compressor (20) does not differ from the respective nominal value by more than a first threshold value,
    - said pressure inside the stack (23) does not exceed a respective maximum value, and
    - the opening $\beta$ of the back-pressure valve (26) does not differ from the respective nominal value by more than a second threshold value.

11. Controller device (60) for controlling an electric power generation system, based on at least one energy source, in particular a renewable energy source, preferably a photovoltaic or fuel cell source, said system operating according to operating performance representable by at least one output power function, indicative of performance, having at least one optimal value, operation of said system being dependent on at least two parameters (X; Y) controllable by the controller device, the controller device being **characterised in that** it comprises processing electronic means capable to execute the method according to any one of claims 1 to 10.

**Patentansprüche**

1. Verfahren zum Steuern eines Systems zum Erzeugen elektrischer Energie, das auf wenigstens einer Energiequelle, insbesondere einer Quelle erneuerbarer Energie, vorzugsweise einer Photovoltaik- oder Brennstoffzellenquelle, beruht, wobei das System in Übereinstimmung mit einem Betriebsverhalten arbeitet, das wenigstens eine Ausgangsleistungsfunktion, die das Verhalten angibt, aufweisend wenigstens einen Optimalwert, dargestellt werden kann, wobei der Betrieb des Systems von wenigstens zwei steuerbaren Parametern (X; Y) abhängt, wobei das Verfahren **dadurch gekennzeichnet ist, dass** es Werte der wenigstens zwei steuerbaren Parameter (X; Y) in Übereinstimmung mit den folgenden Schritten stört:

   a) vorläufiges Annehmen, für jeden der wenigstens zwei steuerbaren Parameter (X; Y), eines Vorzeichens (SX, SY) der Störung, das aus einem positiven Vorzeichen und aus einem negativen Vorzeichen ausgewählt wird, als Vorzeichen der unmittelbar vorausgehenden Störung des jeweiligen steuerbaren Parameters, und Annehmen eines gegenwärtigen steuerbaren Parameters, der aus den wenigstens zwei steuerbaren Parametern (X; Y) ausgewählt wird;

   b) Anwenden einer oder mehrerer Störungen auf den gegenwärtigen steuerbaren Parameter mit demselben Vorzeichen der gegenwärtigen Störung, wobei vor jeder Störung des gegenwärtigen steuerbaren Parameters (X; Y) verifiziert wird, ob der Betrieb des Systems eine oder mehrere Betriebsbeschränkungen erfüllt, und wobei der Schritt c) ausgeführt wird, wenn erfasst wird, dass wenigstens eine der einen oder mehreren Beschränkungen verletzt ist, wobei die eine oder die mehreren Störungen des gegenwärtigen steuerbaren Parameters solange angewendet werden, wie erfasst wird, dass nach jeder einzelnen Störung ein Abstand eines Werts der wenigstens einen das Verhalten angebenden Funktion von dem wenigstens einen Optimalwert abnimmt, während der Schritt c) ausgeführt wird, wenn erfasst wird, dass der Abstand zunimmt;

   c) Annehmen eines aus den wenigstens zwei steuerbaren Parametern (X; Y) ausgewählten steuerbaren Parameters, der von dem während des Schrittes b) gestörten verschieden ist, als gegenwärtigen steuerbaren Parameter;

   d) Annehmen des zu dem Vorzeichen der unmittelbar vorausgehenden Störung desselben gegenwärtigen steuerbaren Parameters entgegengesetzten Vorzeichens als das Vorzeichen der gegenwärtigen Störung des gegenwärtigen steuerbaren Parameters und Zurückkehren zu Schritt b).

2. Verfahren nach Anspruch 1, **dadurch gekennzeichnet, dass** der gegenwärtige steuerbare Parameter (X; Y) in Schritt c) durch einen jeweiligen Betrag einer gegenwärtigen Störung gestört wird, der von dem Abstand eines erfassten Werts der wenigstens einen das Verhalten angebenden Funktion (P; $\Delta P$) von dem wenigstens einen Optimalwert ($P_{target}$) abhängt.

3. Verfahren nach Anspruch 1 oder 2, **dadurch gekennzeichnet, dass** das Verfahren vor dem Schritt c) die folgenden Schritte ausführt, wenn in Schritt b) erfasst wird, dass wenigstens eine der einen oder mehreren Beschränkungen verletzt ist:

   e) Einstellen des gegenwärtigen steuerbaren Parameter zurück auf den Wert, der der unmittelbar vorausgehenden Störung vorausging;

   f) Annehmen eines aus den wenigstens zwei steuerbaren Parametern (X; Y) ausgewählten steuerbaren Parameters, der von dem während des Schrittes b) gestörten verschieden ist, als gegenwärtigen steuerbaren Parameter;

   g) Annehmen desselben Vorzeichens wie das der unmittelbar vorausgehenden Störung desselben gegenwärtigen steuerbaren Parameters als Vorzeichen der gegenwärtigen Störung des gegenwärtigen steuerbaren Parameters und Zurückkehren zu Schritt b).

4. Verfahren nach Anspruch 1 oder 2, **dadurch gekennzeichnet, dass** das Verfahren, wenn in Schritt b) erfasst wird, dass wenigstens eine der einen oder mehreren Beschränkungen verletzt ist, vor dem Schritt c) die folgenden Schritte ausführt:

e') Einstellen des gegenwärtigen steuerbaren Parameter zurück auf den Wert, der der unmittelbar vorausgehenden Störung vorausging;

f) Annehmen eines aus den wenigstens zwei steuerbaren Parametern (X; Y) ausgewählten steuerbaren Parameters, der von dem während des Schrittes b) gestörten verschieden ist, als gegenwärtigen steuerbaren Parameter;

g') Annehmen desselben Vorzeichens wie das der unmittelbar vorausgehenden Störung desselben gegenwärtigen steuerbaren Parameters als Vorzeichen der gegenwärtigen Störung des gegenwärtigen steuerbaren Parameters;

h) Anwenden einer Störung auf den gegenwärtigen steuerbaren Parameter mit dem Vorzeichen der gegenwärtigen Störung;

i) Verifizieren, ob der Betrieb des Systems eine oder mehrere Betriebsbeschränkungen erfüllt;

j) Zurückkehren zu Schritt b), wenn in Schritt i) erfasst wird, dass die eine oder die mehreren Beschränkungen erfüllt sind;

k) Einstellen des gegenwärtigen steuerbaren Parameters zurück auf den Wert, der der unmittelbar vorausgehenden Störung vorausging, Annehmen des zu dem Vorzeichen der unmittelbar vorausgehenden Störung desselben gegenwärtigen steuerbaren Parameter entgegengesetzten Vorzeichens als Vorzeichen der gegenwärtigen Störung des gegenwärtigen steuerbaren Parameters und Zurückkehren zu Schritt b), wenn in Schritt i) erfasst wird, dass wenigstens eine der einen oder mehreren Beschränkungen verletzt ist.

5.  Verfahren nach einem der vorhergehenden Ansprüche, bei dem das System zum Erzeugen elektrischer Energie eine Photovoltaikquelle (1) umfasst, die mit einer einstufigen Wechselrichtervorrichtung, umfassend ein Schaltmittel (M1-M4), verbunden ist, das wiederum mit einem elektrischen Wechselstromnetz oder

- leitungsnetz (2), das wenigstens eine Phase aufweist, mit der Pulsationsfrequenz $\omega_{grid}$, verbunden ist, wobei das Schaltmittel (M1-M4) die Quelle (1), die eine Spannung Vg(t) mit dem Mittelwert $V_g$ ausgeben kann, mit einer Periode $T_s$, die niedriger als die Periode $T_{grid}$, die der Pulsationsfrequenz $\omega_{grid}$ entspricht, ist, periodisch mit dem Leitungsnetz (2) verbindet, so dass der Ausgangsstrom $i_0(t)$ jeder Phase der Wechselrichtervorrichtung phasengleich mit der Spannung $V_0(t)$ mit derselben Phase des Leitungsnetzes (2), deren Maximalwert $V_{0,max}$ ist, ist, wobei das Schaltmittel (M1-M4) durch ein elektronisches Steuermittel (10, 20) gesteuert wird, das in Übereinstimmung mit einer Steuerung über einen einzigen Schaltzyklus des Schaltmittels (M1-M4) arbeitet, wobei die Wechselrichtervorrichtung eine Ausgangsinduktivität L sieht und einen Sensor zum Abtasten eines Ausgangsstroms der Wechselrichtervorrichtung, der einen Verstärkungsfaktor $R_S$ aufweist, der mit dem Leitungsnetz (2) in Reihe geschaltet ist, umfasst, wobei das elektronische Steuermittel (10, 20) umfasst:

- eine zurücksetzbare Integratorschaltung (9), die eine Zeitkonstante $\tau$ derart aufweist, dass $\tau < T_s$ ist, deren Eingang ein Spannungssignal ($V_c$-$K_g$*$V_g$) empfängt, das gleich der Differenz zwischen einer Steuerspannung $V_c$ und einer Spannung, die durch einen ersten Faktor Kg proportional zu der Ausgangsspannung Vg(t) der Quelle (1) ist, ist,

- ein Komparatormittel (14), das ein Signal ausgeben kann, das den Vergleich einer Spannung [$R_s$•$i_0(t)$], die von dem Sensor zum Abtasten eines Ausgangsstroms zugeführt wird, mit der Summe des Ausgangssignals der Integratorschaltung (9) und einer Spannung [$K$•$V_0(t)$], die durch einen zweiten Faktor K proportional zu der Spannung $V_0(t)$ des Leitungsnetzes (2) ist, angibt, und

- ein Generatormittel (11, 12, 13), das das Ausgangssignal von dem Komparatormittel (14) und ein Signal, das die Phase des Leitungsnetzes (2) angibt, empfangen kann, um eines oder mehrere Signale zum Steuern des Schaltmittels (M1-M4) zu liefern,

wobei das System zum Erzeugen elektrischer Energie derart ist, dass es die folgenden Betriebsbeschränkungen erfüllt:

$$- \ V_c \geq K_g V_g + \frac{(2V_{o,max} - V_g)R_s \tau}{2L}$$

- das Eingangssignal der Integratorschaltung (9) ist immer positiv,

- die Eingangsspannung der Wechselrichtervorrichtung ist zu jedem Zeitpunkt höher als ihre Ausgangsspannung und es gilt Folgendes:

$$- K \left( 1 - \frac{P_o(S)}{\alpha \cdot P_{g.MPP}(S_{max})} \right) \cdot (1 - \gamma) \leq \left. \frac{V_m}{V_g} \right|_{min} \leq \left. \frac{V_m}{V_g} \right|_{max} \leq K \left( 1 - \frac{P_o(S)}{\alpha \cdot P_{g.MPP}(S_{max})} \right) \cdot (1 + \gamma)$$

wobei:

$$v_m = \left( \frac{V_c - K_g \cdot v_g}{\tau} \right) \cdot T_s$$

$P_o(S)$ die durchschnittliche Ausgangsleistung der Vorrichtung für eine Menge $S$ von Betriebsbedingungen ist,

$P_{g,MPP}(S_{max})$ die maximale Leistung ist, die die Quelle (1) liefern kann,

$\alpha$ ein erster Überlastkoeffizient mit $\alpha \geq 1$ ist, und

$\gamma$ ein zweiter Koeffizient mit $\gamma < 1$ ist,

wobei das Verfahren **dadurch gekennzeichnet ist, dass** die wenigstens eine das Verhalten angebende Funktion des Systems eine durch das System erzeugte Photovoltaikleistung ist, dass der wenigstens eine Optimalwert eine maximale Photovoltaikleistung ist, die durch das System erzeugt werden kann, und dass die wenigstens zwei steuerbaren Parameter aus der Gruppe ausgewählt werden, die den Verstärkungsfaktor $R_s$ des Sensors zum Abtasten eines Ausgangsstroms der Wechselrichtervorrichtung, die Zeitkonstante $\tau$, die Steuerspannung $V_c$, den ersten Faktor Kg und den zweiten Faktor K umfasst.

6. Verfahren nach Anspruch 5, bei dem die einstufige Wechselrichtervorrichtung anstatt mit einem elektrischen Wechselstromnetz oder -leitungsnetz (2), das wenigstens eine Phase aufweist, mit einer Wechselstromlast, die wenigstens eine Phase aufweist, mit der Pulsationsfrequenz $\omega_{grid}$ verbunden ist, und wobei die Spannung $V_0(t)$ anstelle der Spannung einer Phase des Leitungsnetzes (2) eine Referenzspannung einer Phase der Last ist.

7. Verfahren nach Anspruch 5 oder 6, **dadurch gekennzeichnet, dass** das System zum Erzeugen elektrischer Energie derart ist, dass es ferner wenigstens eine der folgenden zwei Betriebsbeschränkungen erfüllt:

   - die Steuerspannung $V_c$ und der erste Faktor Kg sind derart, dass Folgendes gilt:

$$V_c > K_g \left( V_g + \Delta V_g \right)$$

wobei $\Delta V_g$ die Spitze-Spitze-Amplitude der Schwingung der Spannung $v_g(t)$ ist;
   - der zweite Faktor K ist derart, dass Folgendes gilt:

$$V_g - \Delta V_g > (1 + K) \cdot V_{o.max}$$

8. Verfahren nach einem der Ansprüche 5 bis 7, **dadurch gekennzeichnet, dass** die wenigstens zwei steuerbaren Parameter aus der Steuerspannung $V_c$ und aus dem zweiten Faktor K bestehen oder diese umfassen.

9. Verfahren nach einem der Ansprüche 1 bis 4, bei dem das System zum Erzeugen elektrischer Energie ein Brennstoffzellensystem oder FCS ist, das einen Zellenstapel (23) umfasst, dem ein Kompressor (20) Druckluft zuführt, wobei ein Druck innerhalb des Stapels (23) durch eine Geschwindigkeit $\omega_{cmd}$ des Kompressors (20) und durch eine Öffnung $\beta$ eines Rückschlagventils (26) geregelt wird, wobei das System eine Steuereinheit (60) umfasst, die von einer oder von mehreren Nachschlagetabellen (51) jeweils einem Sollwert $P_{target}$ der Ausgangsleistung des Systems entsprechende Nennwerte der Geschwindigkeit $\omega_{cmd}$ und der Öffnung $\beta$ empfängt, wobei das Verfahren **dadurch gekennzeichnet ist, dass** die wenigstens eine das Verhalten angebende Funktion eine durch das System erzeugte Ausgangsleistung $P_{net}$ ist, dass der wenigstens eine Optimalwert der Leistungssollwert $P_{target}$ ist und dass die wenigstens zwei steuerbaren Parameter aus der Geschwindigkeit $\omega_{cmd}$ des Kompressors (20) und aus der Öffnung ß des Rückschlagventils (26) bestehen oder diese umfassen.

**10.** Verfahren nach Anspruch 9, **dadurch gekennzeichnet, dass** die eine oder die mehreren Betriebsbeschränkungen aus der Gruppe ausgewählt werden, die die folgenden drei umfasst:

- die Geschwindigkeit $\omega_{cmd}$ des Kompressors (20) unterscheidet sich um nicht mehr als einen ersten Schwellenwert von dem jeweiligen Nennwert,
- der Druck innerhalb des Stapels (23) übersteigt nicht einen jeweiligen Maximalwert, und
- die Öffnung $\beta$ des Rückschlagventils (26) unterscheidet sich um nicht mehr als einen zweiten Schwellenwert von dem jeweiligen Nennwert.

**11.** Steuervorrichtung (60) zum Steuern eines Systems zum Erzeugen elektrischer Energie, das auf wenigstens einer Energiequelle, insbesondere einer Quelle erneuerbarer Energie, vorzugsweise einer Photovoltaik- oder Brennstoffzellenquelle, beruht, wobei das System in Übereinstimmung mit einem Betriebsverhalten arbeitet, das durch wenigstens eine Ausgangsleistungsfunktion, die das Verhalten angibt, aufweisend wenigstens einen Optimalwert, dargestellt werden kann, wobei der Betrieb des Systems von wenigstens zwei Parametern (X; Y), die durch die Steuervorrichtung gesteuert werden können, abhängt, wobei die Steuervorrichtung **dadurch gekennzeichnet ist, dass** sie ein elektronisches Verarbeitungsmittel umfasst, das das Verfahren nach einem der Ansprüche 1 bis 10 ausführen kann.

## Revendications

**1.** Procédé pour commander un système de génération d'énergie électrique, basé sur au moins une source d'énergie, en particulier une source d'énergie renouvelable, de préférence une source photovoltaïque ou à piles à combustible, ledit système fonctionnant selon des performances de fonctionnement pouvant être représentées par au moins une fonction de puissance de sortie, indicative de performances, ayant au moins une valeur optimale, le fonctionnement dudit système dépendant d'au moins deux paramètres pouvant être commandés (X ; Y), le procédé étant **caractérisé en ce qu'**il perturbe des valeurs desdits paramètres pouvant être commandés au nombre d'au moins deux (X ; Y) selon les étapes suivantes :

a) au préalable, la prise comme hypothèse, pour chacun desdits paramètres pouvant être commandés au nombre d'au moins deux (X ; Y), d'un signe de perturbation (SX, SY) sélectionné parmi un signe positif et un signe négatif comme signe de la perturbation immédiatement précédente du paramètre pouvant être commandé respectif, et la prise comme hypothèse d'un paramètre pouvant être commandé actuel parmi lesdits paramètres pouvant être commandés au nombre d'au moins deux (X ; Y) ;
b) l'application d'une ou de plusieurs perturbations au paramètre pouvant être commandé actuel avec le même signe de perturbation actuel, et, avant chaque perturbation du paramètre pouvant être commandé actuel (X ; Y) une vérification étant effectuée du fait que le fonctionnement dudit système satisfait à une ou à plusieurs contraintes de fonctionnement, et, quand il est détecté qu'au moins l'une desdites contraintes au nombre d'une ou de plusieurs est violée, l'exécution de l'étape c), lesdites perturbations au nombre d'une ou de plusieurs au paramètre pouvant être commandé actuel étant appliquées tant qu'il est détecté que, après chaque perturbation unique, une distance d'une valeur de ladite fonction indicative de performances au nombre d'au moins une de ladite valeur optimale au nombre d'au moins une diminue, tandis que, lorsqu'il est détecté que ladite distance augmente, l'étape c) est exécutée ;
c) la prise comme hypothèse de paramètre pouvant être commandé actuel d'un paramètre pouvant être commandé sélectionné parmi lesdits paramètres pouvant être commandés au nombre d'au moins deux (X ; Y) qui est différent de celui qui est perturbé durant l'étape b) ;
d) la prise comme hypothèse de signe de perturbation actuel du paramètre pouvant être commandé actuel du signe opposé au signe de la perturbation immédiatement précédente du même paramètre pouvant être commandé actuel, et le retour à l'étape b).

**2.** Procédé selon la revendication 1, **caractérisé en ce que**, dans l'étape c), le paramètre pouvant être commandé actuel (X ; Y) est perturbé par une ampleur respective de perturbation actuelle en fonction de ladite distance d'une valeur détectée de ladite fonction indicative de performances au nombre d'au moins une (P ; $\Delta$P) de ladite valeur optimale au nombre d'au moins une (P$_{target}$).

**3.** Procédé selon la revendication 1 ou 2, **caractérisé en ce que**, lorsque, dans l'étape b), il est détecté qu'au moins l'une desdites contraintes au nombre d'une ou de plusieurs est violée, le procédé exécute, avant l'étape c), les étapes suivantes :

e) le rétablissement du paramètre pouvant être commandé actuel à la valeur précédant la perturbation immédiatement précédente ;

f) la prise comme hypothèse de paramètre pouvant être commandé actuel d'un paramètre pouvant être commandé sélectionné parmi lesdits paramètres pouvant être commandés au nombre d'au moins deux (X ; Y) qui est différent de celui qui est perturbé durant l'étape b) ;

g) la prise comme hypothèse de signe de perturbation actuel du paramètre pouvant être commandé actuel du même signe que celui de la perturbation immédiatement précédente du même paramètre pouvant être commandé actuel, et le retour à l'étape b).

4. Procédé selon la revendication 1 ou 2, **caractérisé en ce que**, lorsque, dans l'étape b), il est détecté qu'au moins l'une desdites contraintes au nombre d'une ou de plusieurs est violée, le procédé exécute, avant l'étape c), les étapes suivantes :

e') le rétablissement du paramètre pouvant être commandé actuel à la valeur précédant la perturbation immédiatement précédente ;

f) la prise comme hypothèse de paramètre pouvant être commandé actuel d'un paramètre pouvant être commandé sélectionné parmi lesdits paramètres pouvant être commandés au nombre d'au moins deux (X ; Y) qui est différent de celui qui est perturbé durant l'étape b) ;

g') la prise comme hypothèse de signe de perturbation actuel du paramètre pouvant être commandé actuel du même signe que celui de la perturbation immédiatement précédente du même paramètre pouvant être commandé actuel ;

h) l'application d'une perturbation au paramètre pouvant être commandé actuel avec le signe de perturbation actuel ;

i) la vérification du fait que le fonctionnement dudit système satisfait à une ou à plusieurs contraintes de fonctionnement ;

j) quand, dans l'étape i), il est détecté que lesdites contraintes au nombre d'une ou de plusieurs sont satisfaites, le retour à l'étape b) ;

k) quand, dans l'étape i), il est détecté qu'au moins l'une desdites contraintes au nombre d'une ou de plusieurs est violée, le rétablissement du paramètre pouvant être commandé actuel à la valeur précédant la perturbation immédiatement précédente, en prenant pour hypothèse comme signe de perturbation actuel du paramètre pouvant être commandé actuel le signe opposé au signe de la perturbation immédiatement précédente du même paramètre pouvant être commandé actuel, et le retour à l'étape b).

5. Procédé selon l'une quelconque des revendications précédentes, dans lequel le système de génération d'énergie électrique comprend une source photovoltaïque (1) connectée à un dispositif d'onduleur à étage unique, comprenant des moyens de commutation (M1 à M4), eux-mêmes connectés à un réseau ou secteur électrique en courant alternatif (2) comportant au moins une phase, de fréquence de pulsation $\omega_{grid}$, les moyens de commutation (M1 à M4) connectant périodiquement, avec une période $T_s$ inférieure à la période $T_{grid}$ correspondant à la fréquence de pulsation $\omega_{grid}$, la source (1), susceptible de délivrer en sortie une tension $v_g(t)$ de valeur moyenne $v_g$, au réseau (2), de telle sorte que le courant de sortie $i_o(t)$ de chaque phase du dispositif d'onduleur soit en phase avec la tension $v_o(t)$ de la même phase du réseau (2), dont la valeur maximale est $V_{o,max}$, les moyens de commutation (M1 à M4) étant commandés par des moyens de commande électroniques (10, 20) fonctionnant selon une commande sur un cycle de commutation unique des moyens de commutation (M1 à M4), le dispositif d'onduleur voyant une inductance de sortie L et comprenant un capteur pour détecter un courant de sortie du dispositif d'onduleur ayant un gain $R_s$, qui est connecté en série au réseau (2), les moyens de commande électroniques (10, 20) comprenant :

- un circuit d'intégrateur pouvant être remis à zéro (9) ayant une constante de temps $\tau$ telle que $\tau < T_s$, dont l'entrée reçoit un signal de tension ($V_c$ - Kg * $v_g$) égal à la différence entre une tension de commande $V_c$ et une tension proportionnelle d'un premier facteur Kg à la tension de sortie $v_g(t)$ de la source (1),

- des moyens formant comparateur (14), susceptibles de délivrer en sortie un signal indicatif de la comparaison d'une tension [$R_s . i_o(t)$] délivrée par ledit capteur pour détecter un courant de sortie avec la somme du signal de sortie du circuit d'intégrateur (9) et d'une tension [K . $v_o(t)$] proportionnelle d'un deuxième facteur K à la tension $v_o(t)$ du réseau (2), et

- des moyens formant générateur (11, 12, 13) susceptibles de recevoir le signal de sortie des moyens formant comparateur (14) et un signal indicatif de la phase du réseau (2) afin de délivrer un ou plusieurs signaux pour commander les moyens de commutation (M1 à M4),

le système de génération d'énergie électrique étant tel qu'il remplisse les contraintes de fonctionnement suivantes :

$$- v_c \geq K_g V_g + \frac{(2V_{o,\max} - V_g)R_s\tau}{2L} \ ,$$

- le signal d'entrée du circuit d'intégrateur (9) est toujours positif,
- à tout instant dans le temps, la tension d'entrée du dispositif d'onduleur est supérieure à la tension de sortie de celui-ci, et

$$- K\left(1 - \frac{P_o(S)}{\alpha . P_{g,MPP}(S_{\max})}\right).(1-\gamma) \leq \left.\frac{V_m}{V_g}\right|_{\min} \leq \left.\frac{V_m}{V_g}\right|_{\max} \leq K\left(1 - \frac{P_o(S)}{\alpha . P_{g,MPP}(S_{\max})}\right).(1+\gamma)$$

où :

$$v_m = \left(\frac{V_c - K_g . v_g}{\tau}\right).T_s$$

$P_o(S)$ est la puissance moyenne de sortie du dispositif pour un jeu S de conditions de fonctionnement, $P_{g,MPP}(S_{max})$ est la puissance maximale pouvant être délivrée par la source (1),

- $\alpha$ est un premier coefficient de surcharge, avec $\alpha \geq 1$, et
- $\gamma$ est un deuxième coefficient, avec $\gamma < 1$,

le procédé étant **caractérisé en ce que** ladite fonction indicative de performances au nombre d'au moins une du système est une puissance photovoltaïque générée par le système, **en ce que** ladite valeur optimale au nombre d'au moins une est une puissance photovoltaïque maximale pouvant être générée par le système, et **en ce que** lesdits paramètres pouvant être commandés au nombre d'au moins deux sont sélectionnés parmi le groupe comprenant le gain $R_s$ du capteur pour détecter un courant de sortie du dispositif d'onduleur, la constante de temps $\tau$, la tension de commande $V_c$, le premier facteur Kg et le deuxième facteur K.

6. Procédé selon la revendication 5, dans lequel le dispositif d'onduleur à étage unique est connecté, à la place d'un réseau ou secteur électrique en courant alternatif (2) comportant au moins une phase, à une charge en courant alternatif comportant au moins une phase, de fréquence de pulsation $\omega_{grid}$, et dans lequel la tension $v_o(t)$ est, à la place de la tension d'une phase du réseau (2), une tension de référence de d'une phase de ladite charge.

7. Procédé selon la revendication 5 ou 6, **caractérisé en ce que** le système de génération d'énergie électrique est tel qu'il satisfasse de plus à au moins l'une des deux contraintes de fonctionnement suivantes :

   - la tension de commande $V_c$ et le premier facteur Kg sont tels que :

   $$V_c > K_g(V_g + \Delta V_g)$$

   où $\Delta V_g$ est l'amplitude de crête à crête de l'oscillation de la tension $V_g(t)$ ;
   - le deuxième facteur K est tel que :

   $$V_g - \Delta V_g > (1 + K) . v_{o,\max}.$$

8. Procédé selon l'une quelconque des revendications 5 à 7, **caractérisé en ce que** lesdits paramètres pouvant être commandés au nombre d'au moins deux sont constitués par, ou comprennent, la tension de commande $V_c$ et le deuxième facteur K.

9. Procédé selon l'une quelconque des revendications 1 à 4, dans lequel le système de génération d'énergie électrique est un système de piles à combustible, ou FCS (« Fuel Cell System »), comprenant un empilement de cellules (23), auquel un compresseur (20) délivre de l'air comprimé, une pression à l'intérieur de l'empilement (23) étant régulée

par une vitesse $\omega_{cmd}$ du compresseur (20) et une ouverture $\beta$ d'une vanne de contre-pression (26), le système comprenant un dispositif de commande (60) qui reçoit à partir d'une ou de plusieurs tables de consultation (51) des valeurs nominales respectives de la vitesse $\omega_{cmd}$ et de l'ouverture $\beta$ correspondant à une valeur cible $P_{target}$ de puissance de sortie du système, le procédé étant **caractérisé en ce que** ladite fonction indicative de performances au nombre d'au moins une est une puissance de sortie $P_{net}$ générée par le système, **en ce que** ladite valeur optimale au nombre d'au moins une est la valeur de puissance cible $P_{target}$, et **en ce que** lesdits paramètres pouvant être commandés au nombre d'au moins deux sont constitués par, ou comprennent, la vitesse $\omega_{cmd}$ du compresseur (20) et l'ouverture $\beta$ de la vanne de contre-pression (26).

10. Procédé selon la revendication 9, **caractérisé en ce que** lesdites contraintes de fonctionnement au nombre d'une ou de plusieurs sont sélectionnées parmi le groupe comprenant les trois contraintes suivantes :

- la vitesse $\omega_{cmd}$ du compresseur (20) ne diffère pas de la valeur nominale respective de plus d'une première valeur de seuil,
- ladite pression à l'intérieur de l'empilement (23) ne dépasse pas une valeur maximale respective, et
- l'ouverture $\beta$ de la vanne de contre-pression (26) ne diffère pas de la valeur nominale respective de plus d'une deuxième valeur de seuil.

11. Dispositif de commande (60) pour commander un système de génération d'énergie électrique, basé sur au moins une source d'énergie, en particulier une source d'énergie renouvelable, de préférence une source photovoltaïque ou à piles à combustible, ledit système fonctionnant selon des performances de fonctionnement pouvant être représentées par au moins une fonction de puissance de sortie, indicative de performances, ayant au moins une valeur optimale, le fonctionnement dudit système dépendant d'au moins deux paramètres (X ; Y) pouvant être commandés par le dispositif de commande, le dispositif de commande étant **caractérisé en ce qu'**il comprend des moyens de traitement électroniques susceptibles d'exécuter le procédé selon l'une quelconque des revendications 1 à 10.

**Fig. 1**

**Fig. 3**

**Fig. 4**

Fig. 2

Fig. 5

EP 2 399 179 B1

Fig. 6

Fig. 7

Fig. 8

Fig. 9

Fig. 10

Fig. 12

a)

b)

Fig. 11

a)

b)

Fig. 13

a)

b)

Fig. 14

Fig. 15

a)

b)

Fig. 16

Fig. 17

Fig. 21

a)

b)

Fig. 18

a)

b)

Fig. 19

a)

b)

Fig. 20

a)

b)

Fig. 22

a)

b)

c)

Fig. 23

51

41

LOOK UP
TABLES

FUEL CELL SYSTEM

output power

P&O-BASED
CONTROLLER

reference power

60

··············· valve aperture
— — — — compressor speed

Fig. 24

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5798631 A
- US 2005209898 A1
- EP 0356191 A2

- WO 2007007360 A2

### Non-patent literature cited in the description

- **Y. CHEN ; K.MA. SMEDLEY.** A cost-effective single-stage inverter with maximum power point tracking. *IEEE Transactions on Power Electronics,* September 2004, vol. 19 (5), 1289-1294
- **N.FEMIA ; D.GRANOZIO ; G.PETRONE ; G.SPAGNUOLO ; M.VITELLI.** Optimized One Cycle Control in Photovoltaic Grid Connected Applications. *IEEE Transactions on Aerospace and Electronic Systems,* July 2006, vol. 42 (3), 963-973

- **M.FORTUNATO ; A.GIUSTINIANI ; G.PETRONE ; G.SPAGNUOLO ; M.VITELLI.** Maximum Power Point Tracking in a One Cycle Controlled Single Stage Photovoltaic Inverter. *IEEE Transactions on Industrial Electronics,* July 2008, vol. 55 (7), 2684-2693
- **J.T. PUKRUSHPAN ; A.G. STEFANOPOULOU ; H.PENG.** Control of fuel cell breathing. *IEEE Control Systems Magazine,* April 2004, 30-46